(19) Europäisches Patentamt
European Patent Office
Office européen des brevets

(11) **EP 4 603 556 A1**

(12) **EUROPEAN PATENT APPLICATION**
published in accordance with Art. 153(4) EPC

(43) Date of publication:
**20.08.2025 Bulletin 2025/34**

(21) Application number: 23877131.5

(22) Date of filing: **25.09.2023**

(51) International Patent Classification (IPC):
*C09J 5/00* (2006.01)    *B29B 17/02* (2006.01)
*C09J 133/00* (2006.01)    *C11D 7/04* (2006.01)
*C11D 7/50* (2006.01)

(52) Cooperative Patent Classification (CPC):
**B29B 17/02; C09J 5/00; C09J 133/00; C11D 7/04; C11D 7/50**

(86) International application number:
**PCT/JP2023/034775**

(87) International publication number:
**WO 2024/080125 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.10.2022 JP 2022165663**

(71) Applicant: NITTO DENKO CORPORATION
Ibaraki-shi
Osaka 567-8680 (JP)

(72) Inventors:
• KOTANI, Chihiro
  Ibaraki-shi, Osaka 567-8680 (JP)
• YAMAMOTO, Akiyoshi
  Ibaraki-shi, Osaka 567-8680 (JP)
• YAMADA, Yosuke
  Ibaraki-shi, Osaka 567-8680 (JP)

(74) Representative: Hoffmann Eitle
Patent- und Rechtsanwälte PartmbB
Arabellastraße 30
81925 München (DE)

(54) **ADHESIVE PROCESSING LIQUID, METHOD FOR PRODUCING RECYCLED BASE MATERIAL USING ADHESIVE PROCESSING LIQUID, AND METHOD FOR PRODUCING RECYCLED POLYMER COMPOSITION USING ADHESIVE PROCESSING LIQUID**

(57)    Provided is a pressure-sensitive adhesive treatment liquid, which can easily remove a pressure-sensitive adhesive and has a small environmental load. Also provided is a method of producing a recycled base material with a pressure-sensitive adhesive treatment liquid, the method including easily recovering a recycled base material suppressed in contamination and corrosion from a pressure-sensitive adhesive tape including a base material and a pressure-sensitive adhesive with such pressure-sensitive adhesive treatment liquid. Also provided is a method of producing a recycled polymer composition that may serve as a raw material for a recycled pressure-sensitive adhesive with such pressure-sensitive adhesive treatment liquid. The pressure-sensitive adhesive treatment liquid according to an embodiment of the present invention is a pressure-sensitive adhesive treatment liquid for treating a pressure-sensitive adhesive, including: water; an organic solvent; and an alkaline compound, wherein the organic solvent and the water form a phase-separated state.

EP 4 603 556 A1

**Description**

TECHNICAL FIELD

The present invention relates to a pressure-sensitive adhesive treatment liquid, a method of producing a recycled base material with a pressure-sensitive adhesive treatment liquid, and a method of producing a recycled polymer composition with a pressure-sensitive adhesive treatment liquid.

BACKGROUND ART

A pressure-sensitive adhesive tape has been used in a large amount in, for example, the bonding of a label or the like to an article or a wrapping material, the packaging of a packaging material, a production process for an electronic member or an optical member, and a masking application. In particular, in recent years, the frequency at which the pressure-sensitive adhesive tape is used in the production process for an electronic member or an optical member has been increasing, and hence a large amount of pressure-sensitive adhesive tape waste has been produced in, for example, a production site.

Typically, the pressure-sensitive adhesive tape waste is subjected to waste treatment by being burnt, or is subjected to waste treatment by being brought into a waste disposal site. However, such waste treatment is not preferred from the viewpoint of a reduction in environmental load, and from the viewpoint of resource circulation.

In view of the foregoing, such waste treatment for the pressure-sensitive adhesive tape waste as described above needs to be reduced to the extent possible, and the resources need to be reused. The recycling of a material for the pressure-sensitive adhesive tape is conceived as means for reducing such waste treatment for the pressure-sensitive adhesive tape. The establishment of a technology of recycling the material for the pressure-sensitive adhesive tape leads to, for example, the suppression of $CO_2$ emissions involved in fossil resource mining, and hence a large effect is expected to solve a problem of climate change.

Typical examples of the material for the pressure-sensitive adhesive tape include a pressure-sensitive adhesive and a base material. The pressure-sensitive adhesive tape is typically obtained by forming the pressure-sensitive adhesive on the base material as follows: a pressure-sensitive adhesive composition is formed by dissolving a polymer (sometimes referred to as "base polymer") and an additive such as a cross-linking agent depending on purposes in a solvent; the composition is applied to the base material; and heating, drying, or the like is performed as required to advance a cross-linking reaction (for example, Patent Literature 1).

CITATION LIST

Patent Literature

Patent Literature 1: JP 2021-175796 A

SUMMARY OF INVENTION

Technical Problem

An object of the present invention is to provide a pressure-sensitive adhesive treatment liquid, which can easily remove a pressure-sensitive adhesive and has a small environmental load. Another object of the present invention is to provide a method of producing a recycled base material with a pressure-sensitive adhesive treatment liquid, the method including easily recovering a recycled base material suppressed in contamination and corrosion from a pressure-sensitive adhesive tape including a base material and a pressure-sensitive adhesive with such pressure-sensitive adhesive treatment liquid. Still another object of the present invention is to provide a method of producing a recycled polymer composition that may serve as a raw material for a recycled pressure-sensitive adhesive with such pressure-sensitive adhesive treatment liquid.

Solution to Problem

[1] According to one embodiment of the present invention, there is provided a pressure-sensitive adhesive treatment liquid for treating a pressure-sensitive adhesive, including: water; an organic solvent; and an alkaline compound, wherein the organic solvent and the water form a phase-separated state.

[2] In the pressure-sensitive adhesive treatment liquid according to the above-mentioned item [1], a concentration of the alkaline compound in the pressure-sensitive adhesive treatment liquid may be from 0.001 wt% to 50 wt%.

[3] In the pressure-sensitive adhesive treatment liquid according to the above-mentioned item [1] or [2], a relative distance Ra between a Hansen solubility parameter value of the water and a Hansen solubility parameter value of the organic solvent may be 24 or more, where the relative distance Ra is calculated by the following equation.

$$Ra=\sqrt{[4(\delta D2-\delta D1)^2+(\delta P2-\delta P1)^2+(\delta H2-\delta H1)^2]}$$

$\delta D1$: Energy produced by an intermolecular dispersion force of the organic solvent (unit: $MPa^{0.5}$)

$\delta D2$: Energy produced by an intermolecular dispersion force of the water (unit: $MPa^{0.5}$) $\delta P1$: Energy produced by an intermolecular dipole interaction of the organic solvent (unit: $MPa^{0.5}$)

$\delta P2$: Energy produced by an intermolecular dipole interaction of the water (unit: $MPa^{0.5}$) $\delta H1$: Energy produced by an intermolecular hydrogen bond of the organic solvent (unit: $MPa^{0.5}$)

$\delta H2$: Energy produced by an intermolecular hydrogen bond of the water (unit: $MPa^{0.5}$)

[4] In the pressure-sensitive adhesive treatment liquid according to any one of the above-mentioned items [1] to [3], the organic solvent may be a single solvent.

[5] In the pressure-sensitive adhesive treatment liquid according to any one of the above-mentioned items [1] to [3], the organic solvent may be a mixed solvent.

[6] In the pressure-sensitive adhesive treatment liquid according to any one of the above-mentioned items [1] to [5], a content of the organic solvent may be from 1 vol% to 85 vol% with respect to a total of 100 vol% of the water and the organic solvent in the pressure-sensitive adhesive treatment liquid.

[7] In the pressure-sensitive adhesive treatment liquid according to any one of the above-mentioned items [1] to [6], the pressure-sensitive adhesive may be a pressure-sensitive adhesive in a pressure-sensitive adhesive tape.

[8] According to one embodiment of the present invention, there is provided a method of producing a recycled base material from a pressure-sensitive adhesive tape including a base material and a pressure-sensitive adhesive, the method including an impregnation step of impregnating the pressure-sensitive adhesive with the pressure-sensitive adhesive treatment liquid of any one of the above-mentioned items [1] to [7] to perform impregnation treatment.

[9] In the method of producing a recycled base material according to the above-mentioned item [8], the impregnation step may include subjecting the pressure-sensitive adhesive treatment liquid to at least one kind selected from the group consisting of: stirring; and ultrasonic irradiation.

[10] The method of producing a recycled base material according to the above-mentioned item [8] or [9] may further include, after the impregnation step, a material separation step of separating a structure derived from the base material from the pressure-sensitive adhesive tape.

[11] In the method of producing a recycled base material according to the above-mentioned item [10], the material separation step may include adding a washing liquid to the pressure-sensitive adhesive tape after the impregnation treatment.

[12] The method of producing a recycled base material according to the above-mentioned item [11] may further include a liquid separation step of separating the water and the organic solvent from each other.

[13] According to one embodiment of the present invention, there is provided a method of producing a recycled polymer composition from a pressure-sensitive adhesive tape including a base material and a pressure-sensitive adhesive, the method including an impregnation step of impregnating the pressure-sensitive adhesive with the pressure-sensitive adhesive treatment liquid of any one of the above-mentioned items [1] to [7] to perform impregnation treatment.

[14] In the method of producing a recycled polymer composition according to the above-mentioned item [13], the impregnation step may include subjecting the pressure-sensitive adhesive treatment liquid to at least one kind selected from the group consisting of: stirring; and ultrasonic irradiation.

[15] In the method of producing a recycled polymer composition according to the above-mentioned item [14], the impregnation step may include warming the pressure-sensitive adhesive treatment liquid.

[16] The method of producing a recycled polymer composition according to any one of the above-mentioned items [13] to [15] may further include, after the impregnation step, a material separation step of separating a composition derived from the pressure-sensitive adhesive from the pressure-sensitive adhesive tape.

[17] In the method of producing a recycled polymer composition according to the above-mentioned item [16], the material separation step may include adding washing water to the pressure-sensitive adhesive tape after the impregnation treatment.

[18] The method of producing a recycled polymer composition according to the above-mentioned item [17] may further include a liquid separation step of separating the water and the organic solvent from each other.

Advantageous Effects of Invention

The present invention can provide the pressure-sensitive adhesive treatment liquid, which can easily remove a pressure-sensitive adhesive and has a small environmental load. The present invention can also provide the method of producing a recycled base material with a pressure-sensitive adhesive treatment liquid, the method including easily recovering a recycled base material suppressed in contamination and corrosion from a pressure-sensitive adhesive tape including a base material and a pressure-sensitive adhesive with such pressure-sensitive adhesive treatment liquid. The present invention can also provide the method of producing a recycled polymer composition that may serve as a raw material for a recycled pressure-sensitive adhesive with such pressure-sensitive adhesive treatment liquid.

DESCRIPTION OF EMBODIMENTS

When the expression "weight" is used herein, the expression may be replaced with "mass" that has been commonly used as an SI unit for representing a weight.

When the expression "(meth)acryl" is used herein, the expression means "acryl and/or methacryl," when the expression "(meth)acrylate" is used herein, the expression means "acrylate and/or methacrylate," when the expression "(meth)allyl" is used herein, the expression means "allyl and/or methallyl," and when the expression "(meth)acrolein" is used herein, the expression means "acrolein and/or methacrolein."

<<1. Pressure-sensitive Adhesive Treatment Liquid>>

A pressure-sensitive adhesive treatment liquid according to an embodiment of the present invention is a pressure-sensitive adhesive treatment liquid for treating a pressure-sensitive adhesive, the pressure-sensitive adhesive treatment liquid including water, an organic solvent, and an alkaline compound.

A pressure-sensitive adhesive having any appropriate form may be adopted as the pressure-sensitive adhesive to be treated with the pressure-sensitive adhesive treatment liquid according to the embodiment of the present invention to the extent that the effects of the present invention are not impaired. Such pressure-sensitive adhesive is preferably a pressure-sensitive adhesive in a pressure-sensitive adhesive tape, more preferably the pressure-sensitive adhesive in a pressure-sensitive adhesive tape including a base material and a pressure-sensitive adhesive because the effects of the present invention can be further expressed.

The pressure-sensitive adhesive treatment liquid according to the embodiment of the present invention may include any appropriate other component to the extent that the effects of the present invention are not impaired as long as the pressure-sensitive adhesive treatment liquid includes water, the organic solvent, and the alkaline compound.

A total content of water, the organic solvent, and the alkaline compound in the pressure-sensitive adhesive treatment liquid according to the embodiment of the present invention is preferably from 50 wt% to 100 wt%, more preferably from 70 wt% to 100 wt%, still more preferably from 90 wt% to 100 wt%, particularly preferably from 95 wt% to 100 wt%, most preferably from 98 wt% to 100 wt% because the effects of the present invention can be further expressed.

A content of water in the pressure-sensitive adhesive treatment liquid according to the embodiment of the present invention with respect to a total of 100 vol% of water and the organic solvent is preferably from 15 vol% to 99 vol%, more preferably from 25 vol% to 99 vol%, still more preferably from 55 vol% to 99 vol%, particularly preferably from 65 vol% to 99 vol%, most preferably from 85 vol% to 99 vol% because the effects of the present invention can be further expressed.

A content of the organic solvent in the pressure-sensitive adhesive treatment liquid according to the embodiment of the present invention with respect to the total of 100 vol% of water and the organic solvent is preferably from 1 vol% to 85 vol%, more preferably from 1 vol% to 75 vol%, still more preferably from 1 vol% to 45 vol%, particularly preferably from 1 vol% to 35 vol%, most preferably from 1 vol% to 15 vol% because the effects of the present invention can be further expressed.

A concentration of the alkaline compound in the pressure-sensitive adhesive treatment liquid according to the embodiment of the present invention is preferably from 0.001 wt% to 50 wt%, more preferably from 1 wt% to 30 wt%, still more preferably from 1 wt% to 15 wt%, particularly preferably from 1 wt% to 10 wt%, most preferably from 1 wt% to 5 wt% because the effects of the present invention can be further expressed. When the concentration of the alkaline compound in the pressure-sensitive adhesive treatment liquid falls within the ranges, the effects of the present invention can be further expressed. When the concentration of the alkaline compound in the pressure-sensitive adhesive treatment liquid is too high, the alkaline compound may be hardly dissolved therein.

The organic solvent may be a single solvent or a mixed solvent. In the case of the mixed solvent, the mixed solvent may be a mixed solvent of two kinds, or a mixed solvent of three or more kinds.

Any appropriate organic solvent may be adopted as the organic solvent to the extent that the effects of the present

**EP 4 603 556 A1**

invention are not impaired. Examples of such organic solvent include alcohols, hydrocarbons, ketones, esters, ethers, amines, nitriles, carboxylic acids, terpenes, nitro compounds, and halogen compounds.

Examples of the alcohols include: methanol (HSP value=29.6), ethanol (HSP value=26.5), 1-propanol (HSP value=24.6), 2-propanol (IPA) (HSP value=23.6), 1-butanol (HSP value=23.2), 1-pentanol (HSP value=21.7), 1-hexanol (HSP value=21.2), benzyl alcohol (HSP value=23.8), diethylene glycol (HSP value=27.9), and dipropylene glycol (SP value=26.4).

Examples of the hydrocarbons include benzene (HSP value=18.5), toluene (HSP value=18.2), styrene (HSP value=19.1), hexane (HSP value=14.9), cyclohexane (HSP value=16.8), heptane (HSP value=15.3), and methylcyclohexane (HSP value=16.0).

Examples of the ketones include acetone (HSP value=19.9) and methyl ethyl ketone (HSP value=19.1).

An example of the esters is ethyl acetate (HSP value=18.2).

Examples of the ethers include tetrahydrofuran (HSP value=19.5) and cyclopentyl methyl ether (HSP value=17.8).

An example of the amines is aniline (HSP value=23.7).

An example of the nitriles is acetonitrile (HSP value=24.4).

An example of the carboxylic acids is acetic acid (HSP value=21.4).

An example of the terpenes is d-limonene (HSP value=17.8).

An example of the nitro compounds is nitrobenzene (HSP value=22.8).

Examples of the halogen compounds include chloroform (HSP value=18.9) and carbon tetrachloride (HSP value=17.8).

The above-mentioned HSP value is a "Hansen solubility parameter value," and is a parameter value obtained by dividing a Hildebrand solubility parameter value into three components, that is, a dispersion term ($\delta_D$), a polar term ($\delta_P$), and a hydrogen bond term ($\delta_H$), and considering the polarity of a substance. The dispersion term (a term concerning a van der Waals force), the polar term (a term concerning a dipole moment), and the hydrogen bond term (a term concerning a hydrogen bond) may be represented with three-dimensional coordinates.

The Hansen solubility parameter value of a mixed liquid of two or more kinds of liquids may be determined from the following equation (1) as the weighted average "m" of the HSP values of the respective solvents:

$$m=\delta 1\varphi 1+\delta 2\varphi 2\cdots(1)$$

where $\delta 1$ and $\delta 2$ represent the HSP values of the respective liquid components, and $\varphi 1$ and $\varphi 2$ represent the volume fractions of the respective liquid components.

The Hansen solubility parameter value of the mixed liquid of two or more kinds of liquids may be determined from the dispersion terms, polar terms, and hydrogen bond terms of the respective solvents, and the respective volume fractions thereof as shown in the following equation (2). $\delta_{D1}$ and $\delta_{D2}$ represent the dispersion terms of the respective liquid components, $\delta_{P1}$ and $\delta_{P2}$ represent the polar terms of the respective liquid components, $\delta_{H1}$ and $\delta_{H2}$ represent the hydrogen bond terms of the respective liquid components, and $\varphi_1$ and $\varphi_2$ represent the volume fractions of the respective liquid components.

$$m=\{(\delta_{D1}\varphi_1+\delta_{D2}\varphi_2)^2+(\delta_{P1}\varphi_1+\delta_{P2}\varphi_2)^2+(\delta_{H1}\varphi_1+\delta_{H2}\varphi_2)^2\}^{1/2}\cdots(2)$$

The Hansen solubility parameter values of the respective solvents are recorded in "HSPiP version 5," and a value estimated from "HSPiP version 5" is used for a solvent that is not recorded therein.

Any appropriate alkaline compound may be adopted as the alkaline compound to the extent that the effects of the present invention are not impaired. Examples of such alkaline compound include: hydroxides or carbonates of alkali metals or alkaline earth metals, such as potassium hydroxide, sodium hydroxide, and calcium hydroxide; and metal alkoxides, such as sodium methoxide, sodium ethoxide, and potassium t-butoxide. Of those, at least one kind selected from the group consisting of: potassium hydroxide; sodium hydroxide, and sodium ethoxide is preferred.

In the pressure-sensitive adhesive treatment liquid according to the embodiment of the present invention, the organic solvent and water form a phase-separated state. The phrase "the organic solvent and water form a phase-separated state" as used herein means such a state that, under a state in which a liquid of interest is stirred by shaking 10 or more times, the liquid is suspended, or under a state in which a liquid of interest is stirred by shaking 10 or more times and then left to stand still for 3 minutes or more, a liquid phase is separated into two or more phases, and means a state in which the organic solvent and water are not uniformly miscible with each other.

The present invention is based on a technical idea that a pressure-sensitive adhesive treatment liquid including water, the organic solvent, and the alkaline compound can be obtained as a pressure-sensitive adhesive treatment liquid, which can easily remove a pressure-sensitive adhesive and has a small environmental load, by selecting the kind and amount of the organic solvent and the amount of water so that the organic solvent and water in the pressure-sensitive adhesive treatment liquid form a phase-separated state.

In the pressure-sensitive adhesive treatment liquid according to the embodiment of the present invention, a relative distance Ra between a Hansen solubility parameter value of water in the pressure-sensitive adhesive treatment liquid and a Hansen solubility parameter value of the organic solvent in the pressure-sensitive adhesive treatment liquid is preferably 24 or more. When the relative distance Ra is 24 or more, the effects of the present invention can be further expressed because the organic solvent and water in the pressure-sensitive adhesive treatment liquid easily form a phase-separated state.

The relative distance Ra is calculated by the following equation.

$$Ra=\sqrt{[4(\delta D2-\delta D1)^2+(\delta P2-\delta P1)^2+(\delta H2-\delta H1)^2]}$$

$\delta D1$: Energy produced by an intermolecular dispersion force of the organic solvent (unit: $MPa^{0.5}$)
$\delta D2$: Energy produced by an intermolecular dispersion force of water (unit: $MPa^{0.5}$)
$\delta P1$: Energy produced by an intermolecular dipole interaction of the organic solvent (unit: $MPa^{0.5}$)
$\delta P2$: Energy produced by an intermolecular dipole interaction of water (unit: $MPa^{0.5}$)
$\delta H1$: Energy produced by an intermolecular hydrogen bond of the organic solvent (unit: $MPa^{0.5}$)
$\delta H2$: Energy produced by an intermolecular hydrogen bond of water (unit: $MPa^{0.5}$)

The relative distance Ra is more preferably 25 or more, still more preferably 26 or more, still more preferably 27 or more, still more preferably 28 or more, particularly preferably 29 or more, most preferably 30 or more because the effects of the present invention can be further expressed.

The upper limit value of the relative distance Ra is preferably 42 or less, more preferably 40 or less, still more preferably 38 or less, particularly preferably 36 or less, most preferably 35 or less. When the relative distance Ra is too large, when, for example, a pressure-sensitive adhesive tape including a base material and a pressure-sensitive adhesive is treated as a treatment object, the base material may be contaminated and corroded.

<<2. Method of producing Recycled Base Material>>

A method of producing a recycled base material according to an embodiment of the present invention is a method of producing a recycled base material from a pressure-sensitive adhesive tape including a base material and a pressure-sensitive adhesive, the method including an impregnation step of impregnating the pressure-sensitive adhesive tape with the pressure-sensitive adhesive treatment liquid according to the embodiment of the present invention to perform impregnation treatment.

<2-1. Pressure-sensitive Adhesive Tape>

The pressure-sensitive adhesive tape includes the base material and the pressure-sensitive adhesive.

The thickness of the base material is preferably from 1 $\mu$m to 500 $\mu$m, more preferably from 5 $\mu$m to 300 $\mu$m, still more preferably from 10 $\mu$m to 100 $\mu$m, particularly preferably from 15 $\mu$m to 80 $\mu$m, most preferably from 20 $\mu$m to 60 $\mu$m in consideration of a function as the pressure-sensitive adhesive tape.

Any appropriate material may be adopted as a material for the base material to the extent that the effects of the present invention are not impaired. Typical examples of such material for the base material include a resin material and a metal material such as SUS.

Examples of the resin material serving as the material for the base material include polyimide (PI), polyether ether ketone (PEEK), polyethylene terephthalate (PET), polyethylene naphthalate (PEN), polybutylene terephthalate (PBT), an acrylic resin such as polymethyl methacrylate (PMMA), polycarbonate, triacetyl cellulose (TAC), polysulfone, polyarylate, polyethylene (PE), polypropylene (PP), an ethylene-propylene copolymer, an ethylene-vinyl acetate copolymer (EVA), polyamide (nylon), wholly aromatic polyamide (aramid), polyvinyl chloride (PVC), polyvinyl acetate, polyphenylene sulfide (PPS), a fluororesin, and a cyclic olefin-based polymer.

The pressure-sensitive adhesive forms a pressure-sensitive adhesive layer on the base material.

The thickness of the pressure-sensitive adhesive layer is preferably from 1 $\mu$m to 250 $\mu$m, more preferably from 2 $\mu$m to 150 $\mu$m, still more preferably from 3 $\mu$m to 100 $\mu$m, particularly preferably from 5 $\mu$m to 50 $\mu$m in consideration of a function as the pressure-sensitive adhesive tape.

The pressure-sensitive adhesive tape may be produced by any appropriate method to the extent that the effects of the present invention are not impaired. Examples of such production method include:

(1) a method involving forming the pressure-sensitive adhesive on the base material;
(2) a method involving transferring the pressure-sensitive adhesive formed on a release liner onto the base material; and
(3) a method involving laminating the pressure-sensitive adhesive on the base material.

In the pressure-sensitive adhesive tape, any appropriate release liner may be arranged on a surface of the pressure-sensitive adhesive opposite to the base material to, for example, protect the tape until the tape is used. Examples of the release liner include: a release liner obtained by subjecting the surface of a base material (liner base material), such as paper or a plastic film, to silicone treatment; and a release liner obtained by laminating a polyolefin-based resin on the surface of a base material (liner base material), such as paper or a plastic film. Examples of the plastic film serving as a liner base material include a polyethylene film, a polypropylene film, a polybutene film, a polybutadiene film, a polymethylpentene film, a polyvinyl chloride film, a vinyl chloride copolymer film, a polyethylene terephthalate film, a polybutylene terephthalate film, a polyurethane film, and an ethylene-vinyl acetate copolymer film. The thickness of the release liner is preferably from 1 $\mu$m to 500 $\mu$m, more preferably from 3 $\mu$m to 450 $\mu$m, still more preferably from 5 $\mu$m to 400 $\mu$m, particularly preferably from 10 $\mu$m to 300 $\mu$m.

One embodiment of the pressure-sensitive adhesive is an acrylic pressure-sensitive adhesive. Any appropriate acrylic pressure-sensitive adhesive may be adopted as the acrylic pressure-sensitive adhesive to the extent that the effects of the present invention are not impaired. A typical example of such acrylic pressure-sensitive adhesive is an acrylic pressure-sensitive adhesive serving as waste (sometimes referred to as "waste acrylic pressure-sensitive adhesive"). Examples of the waste acrylic pressure-sensitive adhesive include: an acrylic pressure-sensitive adhesive in an acrylic pressure-sensitive adhesive tape recovered after its use; an acrylic pressure-sensitive adhesive present as an adhesive residue on an adherend having bonded thereto the acrylic pressure-sensitive adhesive tape at the time of the peeling of the acrylic pressure-sensitive adhesive tape from the adherend; and an acrylic pressure-sensitive adhesive adhering to a production device for an acrylic pressure-sensitive adhesive.

The acrylic pressure-sensitive adhesive may be formed by any appropriate method. An example of such method is a method of forming the acrylic pressure-sensitive adhesive from an acrylic pressure-sensitive adhesive composition, more specifically, a method including: applying an acrylic pressure-sensitive adhesive composition onto any appropriate base material; heating and drying the composition as required; and curing the composition as required to form the pressure-sensitive adhesive (specifically, pressure-sensitive adhesive layer) on the base material. Examples of such application method include methods involving using a gravure roll coater, a reverse roll coater, a kiss roll coater, a dip roll coater, a bar coater, a knife coater, an air knife coater, a spray coater, a comma coater, a direct coater, a roll brush coater, and a die coater.

The acrylic pressure-sensitive adhesive composition preferably contains an acrylic polymer and a cross-linking agent because the effects of the present invention can be further expressed.

The acrylic polymer is what may be called a base polymer in the field of acrylic pressure-sensitive adhesives. The number of kinds of the acrylic polymers may be only one, or two or more.

The content of the acrylic polymer in the acrylic pressure-sensitive adhesive composition is preferably from 50 wt% to 100 wt%, more preferably from 60 wt% to 100 wt%, still more preferably from 70 wt% to 100 wt%, particularly preferably from 80 wt% to 100 wt%, most preferably from 90 wt% to 100 wt% in terms of solid content.

Any appropriate acrylic polymer may be adopted as the acrylic polymer to the extent that the effects of the present invention are not impaired.

The weight-average molecular weight of the acrylic polymer is preferably from 100,000 to 3,000,000, more preferably from 150,000 to 2,000,000, still more preferably from 200,000 to 1,500,000, particularly preferably from 250,000 to 1,000,000.

The glass transition temperature (Tg) of the acrylic polymer is preferably from - 100°C to 30°C, more preferably from -95°C to 20°C, still more preferably from -90°C to 10°C, particularly preferably from -80°C to 0°C.

The acrylic polymer is preferably an acrylic polymer formed through polymerization from a composition (A) containing a (meth)acrylic acid alkyl ester whose alkyl ester moiety has an alkyl group having 4 to 12 carbon atoms (component (a)), and at least one kind selected from the group consisting of: a (meth)acrylic acid ester having a OH group; and (meth)acrylic acid (component (b)) because the effects of the present invention can be further expressed. The number of kinds of the components (a) and the number of kinds of the components (b) may each be independently only one, or two or more.

Examples of the (meth)acrylic acid alkyl ester whose alkyl ester moiety has an alkyl group having 4 to 12 carbon atoms (component (a)) include n-butyl (meth)acrylate, isobutyl (meth)acrylate, s-butyl (meth)acrylate, t-butyl (meth)acrylate, pentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, and dodecyl (meth)acrylate. Of those, n-butyl (meth)acrylate and 2-ethylhexyl (meth)acrylate are preferred, and n-butyl acrylate and 2-ethylhexyl acrylate are more preferred because the effects of the present invention can be further expressed.

Examples of the at least one kind selected from the group consisting of: a (meth)acrylic acid ester having a OH group; and (meth)acrylic acid (component (b)) include: (meth)acrylic acid esters each having a OH group, such as hydroxyethyl (meth)acrylate, hydroxypropyl (meth)acrylate, and hydroxybutyl (meth)acrylate; and (meth)acrylic acid. Of those, hydroxyethyl (meth)acrylate and (meth)acrylic acid are preferred, and hydroxyethyl acrylate and acrylic acid are more preferred because the effects of the present invention can be further expressed.

The composition (A) may contain a copolymerizable monomer except the component (a) and the component (b). The number of kinds of the copolymerizable monomers may be only one, or two or more. Examples of such copolymerizable monomer include: carboxyl group-containing monomers (provided that (meth)acrylic acid is excluded), such as itaconic acid, maleic acid, fumaric acid, crotonic acid, isocrotonic acid, and acid anhydrides thereof (e.g., acid anhydride group-containing monomers, such as maleic anhydride and itaconic anhydride); amide group-containing monomers, such as (meth)acrylamide, N,N-dimethyl (meth)acrylamide, N-methylol (meth)acrylamide, N-methoxymethyl (meth)acrylamide, N-butoxymethyl (meth)acrylamide, and N-hydroxyethyl (meth)acrylamide; amino group-containing monomers, such as aminoethyl (meth)acrylate, dimethylaminoethyl (meth)acrylate, and t-butylaminoethyl (meth)acrylate; epoxy group-containing monomers, such as glycidyl (meth)acrylate and methylglycidyl (meth)acrylate; cyano group-containing monomers, such as acrylonitrile and methacrylonitrile; heterocycle-containing vinyl-based monomers, such as N-vinyl-2-pyrrolidone, (meth)acryloylmorpholine, N-vinylpiperidone, N-vinylpiperazine, N-vinylpyrrole, N-vinylimidazole, vinylpyridine, vinylpyrimidine, and vinyloxazole; sulfonic acid group-containing monomers such as sodium vinylsulfonate; phosphoric acid group-containing monomers such as 2-hydroxyethylacryloyl phosphate; imide group-containing monomers, such as cyclohexylmaleimide and isopropylmaleimide; isocyanate group-containing monomers such as 2-methacryloyloxyethyl isocyanate; (meth)acrylic acid esters each having an alicyclic hydrocarbon group, such as cyclopentyl (meth)acrylate, cyclohexyl (meth)acrylate, and isobornyl (meth)acrylate; (meth)acrylic acid esters each having an aromatic hydrocarbon group, such as phenyl (meth)acrylate, phenoxyethyl (meth)acrylate, and benzyl (meth)acrylate; vinyl esters, such as vinyl acetate and vinyl propionate; aromatic vinyl compounds, such as styrene and vinyltoluene; olefins and dienes, such as ethylene, butadiene, isoprene, and isobutylene; vinyl ethers such as a vinyl alkyl ether; and vinyl chloride.

A polyfunctional monomer may also be adopted as the copolymerizable monomer. The term "polyfunctional monomer" refers to a monomer having two or more ethylenically unsaturated groups in a molecule thereof. Any appropriate ethylenically unsaturated groups may be adopted as the ethylenically unsaturated groups to the extent that the effects of the present invention are not impaired. Examples of such ethylenically unsaturated group include radically polymerizable functional groups, such as a vinyl group, a propenyl group, an isopropenyl group, a vinyl ether group (vinyloxy group), and an allyl ether group (allyloxy group). Examples of the polyfunctional monomer include hexanediol di(meth)acrylate, butanediol di(meth)acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl (meth)acrylate, vinyl (meth)acrylate, divinylbenzene, epoxy acrylate, polyester acrylate, and urethane acrylate. The number of kinds of such polyfunctional monomers may be only one, or two or more.

A (meth)acrylic acid alkoxyalkyl ester may also be adopted as the copolymerizable monomer. Examples of the (meth)acrylic acid alkoxyalkyl ester include 2-methoxyethyl (meth)acrylate, 2-ethoxyethyl (meth)acrylate, methoxytriethylene glycol (meth)acrylate, 3-methoxypropyl (meth)acrylate, 3-ethoxypropyl (meth)acrylate, 4-methoxybutyl (meth)acrylate, and 4-ethoxybutyl (meth)acrylate. The number of kinds of the (meth)acrylic acid alkoxyalkyl esters may be only one, or two or more.

The content of the (meth)acrylic acid alkyl ester whose alkyl ester moiety has an alkyl group having 4 to 12 carbon atoms (component (a)) is preferably 50 wt% or more, more preferably from 60 wt% to 100 wt%, still more preferably from 70 wt% to 100 wt%, particularly preferably from 80 wt% to 100 wt% with respect to the total amount (100 wt%) of the monomer components for forming the acrylic polymer because the effects of the present invention can be further expressed.

The content of the at least one kind selected from the group consisting of: a (meth)acrylic acid ester having a OH group; and (meth)acrylic acid (component (b)) is preferably 0.1 wt% or more, more preferably from 1.0 wt% to 50 wt%, still more preferably from 1.5 wt% to 40 wt%, particularly preferably from 2.0 wt% to 30 wt% with respect to the total amount (100 wt%) of the monomer components for forming the acrylic polymer because the effects of the present invention can be further expressed.

In the acrylic polymer, the total content of the component (a), the component (b), and the carboxyl group-containing monomer is preferably from 5 wt% to 95 wt%, more preferably from 10 wt% to 95 wt%, still more preferably from 15 wt% to 95 wt%, still more preferably from 20 wt% to 95 wt%, still more preferably from 25 wt% to 95 wt%, still more preferably from 30 wt% to 95 wt%, particularly preferably from 35 wt% to 90 wt%, most preferably from 40 wt% to 90 wt% with respect to the total amount (100 wt%) of the monomer components.

The composition (A) may contain any appropriate other component to the extent that the effects of the present invention are not impaired. Examples of such other component include a polymerization initiator, a chain transfer agent, and a solvent. Any appropriate content may be adopted as the content of each of those other components to the extent that the effects of the present invention are not impaired.

A thermal polymerization initiator, a photopolymerization initiator (photoinitiator), or the like may be adopted as the polymerization initiator in accordance with the kind of a polymerization reaction. The number of kinds of the polymerization initiators may be only one, or two or more.

The thermal polymerization initiator may be preferably adopted at the time of the production of the acrylic polymer by solution polymerization. Examples of such thermal polymerization initiator include an azo-based polymerization initiator, a peroxide-based polymerization initiator (e.g., dibenzoyl peroxide or tert-butyl permaleate), and a redox-based polymerization initiator. Of those thermal polymerization initiators, an azo-based polymerization initiator disclosed in JP 2002-69411 A is particularly preferred. Such azo-based polymerization initiator is preferred because a decomposed product of the polymerization initiator hardly remains as a portion, which serves as a cause for the generation of a heat-generated gas (outgas), in the acrylic polymer. Examples of the azo-based polymerization initiator include 2,2'-azobisisobutyronitrile (hereinafter sometimes referred to as "AIBN"), 2,2'-azobis-2-methylbutyronitrile (hereinafter sometimes referred to as "AMBN"), dimethyl 2,2'-azobis(2-methylpropionate), and 4,4'-azobis-4-cyanovaleric acid. The usage amount of the azo-based polymerization initiator is preferably from 0.01 part by weight to 5.0 parts by weight, more preferably from 0.05 part by weight to 4.0 parts by weight, still more preferably from 0.1 part by weight to 3.0 parts by weight, particularly preferably from 0.15 part by weight to 3.0 parts by weight, most preferably from 0.20 part by weight to 2.0 parts by weight with respect to the total amount (100 parts by weight) of the monomer components for forming the acrylic polymer.

The photopolymerization initiator may be preferably adopted at the time of the production of the acrylic polymer by active energy ray polymerization. Examples of the photopolymerization initiator include a benzoin ether-based photopolymerization initiator, an acetophenone-based photopolymerization initiator, an α-ketol-based photopolymerization initiator, an aromatic sulfonyl chloride-based photopolymerization initiator, a photoactive oxime-based photopolymerization initiator, a benzoin-based photopolymerization initiator, a benzil-based photopolymerization initiator, a benzophenone-based photopolymerization initiator, a ketal-based photopolymerization initiator, and a thioxanthone-based photopolymerization initiator.

Examples of the benzoin ether-based photopolymerization initiator include benzoin methyl ether, benzoin ethyl ether, benzoin propyl ether, benzoin isopropyl ether, benzoin isobutyl ether, 2,2-dimethoxy-1,2-diphenylethan-1-one, and anisole methyl ether. Examples of the acetophenone-based photopolymerization initiator include 2,2-diethoxyacetophenone, 2,2-dimethoxy-2-phenylacetophenone, 1-hydroxycyclohexyl phenyl ketone, 4-phenoxydichloroacetophenone, and 4-(t-butyl)dichloroacetophenone. Examples of the α-ketol-based photopolymerization initiator include 2-methyl-2-hydroxypropiophenone and 1-[4-(2-hydroxyethyl)phenyl]-2-methylpropan-1-one. An example of the aromatic sulfonyl chloride-based photopolymerization initiator is 2-naphthalenesulfonyl chloride. An example of the photoactive oxime-based photopolymerization initiator is 1-phenyl-1,1-propanedione-2-(o-ethoxycarbonyl)-oxime. An example of the benzoin-based photopolymerization initiator is benzoin. An example of the benzil-based photopolymerization initiator is benzil. Examples of the benzophenone-based photopolymerization initiator include benzophenone, benzoyl benzoic acid, 3,3'-dimethyl-4-methoxybenzophenone, polyvinylbenzophenone, and α-hydroxycyclohexyl phenyl ketone. An example of the ketal-based photopolymerization initiator is benzyl dimethyl ketal. Examples of the thioxanthone-based photopolymerization initiator include thioxanthone, 2-chlorothioxanthone, 2-methylthioxanthone, 2,4-dimethylthioxanthone, isopropylthioxanthone, 2,4-diisopropylthioxanthone, and dodecylthioxanthone.

The usage amount of the photopolymerization initiator is preferably from 0.01 part by weight to 3.0 parts by weight, more preferably from 0.015 part by weight to 2.0 parts by weight, still more preferably from 0.02 part by weight to 1.5 parts by weight, particularly preferably from 0.025 part by weight to 1.0 part by weight, most preferably from 0.03 part by weight to 0.50 part by weight with respect to the total amount (100 parts by weight) of the monomer components for forming the acrylic polymer.

The acrylic pressure-sensitive adhesive composition may contain a cross-linking agent. When the cross-linking agent is used, the cohesive strength of the acrylic pressure-sensitive adhesive can be improved, and hence the effects of the present invention can be further expressed. The number of kinds of the cross-linking agents may be only one, or two or more.

Examples of the cross-linking agent include a polyfunctional isocyanate-based cross-linking agent, an epoxy-based cross-linking agent, a melamine-based cross-linking agent, and a peroxide-based cross-linking agent, and as well, a urea-based cross-linking agent, a metal alkoxide-based cross-linking agent, a metal chelate-based cross-linking agent, a metal salt-based cross-linking agent, a carbodiimide-based cross-linking agent, an oxazoline-based cross-linking agent, an aziridine-based cross-linking agent, and an amine-based cross-linking agent. Of those, at least one kind selected from the group consisting of: a polyfunctional isocyanate-based cross-linking agent; and an epoxy-based cross-linking agent (component (c)) is preferred because the effects of the present invention can be further expressed.

Examples of the polyfunctional isocyanate-based cross-linking agent include: lower aliphatic polyisocyanates, such as 1,2-ethylene diisocyanate, 1,4-butylene diisocyanate, and 1,6-hexamethylene diisocyanate; alicyclic polyisocyanates, such as cyclopentylene diisocyanate, cyclohexylene diisocyanate, isophorone diisocyanate, hydrogenated tolylene diisocyanate, and hydrogenated xylene diisocyanate; and aromatic polyisocyanates, such as 2,4-tolylene diisocyanate, 2,6-tolylene diisocyanate, 4,4'-diphenylmethane diisocyanate, and xylylene diisocyanate. Examples of the polyfunctional isocyanate-based cross-linking agent also include commercially available products, such as a trimethylolpropane/tolylene diisocyanate adduct (manufactured by Nippon Polyurethane Industry Co., Ltd., product name: "CORONATE L"), a trimethylolpropane/hexamethylene diisocyanate adduct (manufactured by Nippon Polyurethane Industry Co., Ltd., product name: "CORONATE HL"), a product available under the product name "CORONATE HX" (Nippon Polyurethane Industry Co., Ltd.), and a trimethylolpropane/xylylene diisocyanate adduct (manufactured by Mitsui Chemicals, Inc., product name: "TAKENATE 110N").

Examples of the epoxy-based cross-linking agent (polyfunctional epoxy compound) include N,N,N',N'-tetraglycidyl-m-xylenediamine, diglycidylaniline, 1,3-bis(N,N-diglycidylaminomethyl)cyclohexane, 1,6-hexanediol diglycidyl ether, neopentyl glycol diglycidyl ether, ethylene glycol diglycidyl ether, propylene glycol diglycidyl ether, polyethylene glycol diglycidyl ether, polypropylene glycol diglycidyl ether, sorbitol polyglycidyl ether, glycerol polyglycidyl ether, pentaerythritol polyglycidyl ether, polyglycerol polyglycidyl ether, sorbitan polyglycidyl ether, trimethylolpropane polyglycidyl ether, adipic acid diglycidyl ester, o-phthalic acid diglycidyl ester, triglycidyl-tris(2-hydroxyethyl) isocyanurate, resorcinol diglycidyl ether, bisphenol-S-diglycidyl ether, and an epoxy-based resin having two or more epoxy groups in a molecule thereof. Examples of the epoxy-based cross-linking agent also include commercially available products such as a product available under the product name "TETRAD-C" (manufactured by Mitsubishi Gas Chemical Company, Inc.).

Any appropriate content may be adopted as the content of the cross-linking agent in the acrylic pressure-sensitive adhesive composition to the extent that the effects of the present invention are not impaired. Such content is, for example, preferably from 0.1 part by weight to 5.0 parts by weight, more preferably from 0.2 part by weight to 4.5 parts by weight, still more preferably from 0.3 part by weight to 4.0 parts by weight, particularly preferably from 0.4 part by weight to 3.5 parts by weight with respect to the solid content (100 parts by weight) of the acrylic polymer because the effects of the present invention can be further expressed.

The acrylic pressure-sensitive adhesive composition may contain any appropriate other component to the extent that the effects of the present invention are not impaired. Examples of such other component include a polymer component except the acrylic polymer, a cross-linking accelerator, a cross-linking catalyst, a silane coupling agent, a tackifier resin (e.g., a rosin derivative, a polyterpene resin, a petroleum resin, or an oil-soluble phenol), an age resistor, an inorganic filler, an organic filler, a metal powder, a colorant (e.g., a pigment or a dye), a foil-like material, a UV absorber, an antioxidant, a light stabilizer, a chain transfer agent, a plasticizer, a softening agent, a surfactant, an antistatic agent, a conductive agent, a stabilizer, a surface lubricant, a leveling agent, a corrosion inhibitor, a heat stabilizer, a polymerization inhibitor, a lubricant, a solvent, and a catalyst.

Another embodiment of the pressure-sensitive adhesive is a silicone-based pressure-sensitive adhesive. Any appropriate silicone-based pressure-sensitive adhesive may be adopted as the silicone-based pressure-sensitive adhesive to the extent that the effects of the present invention are not impaired. An example of such silicone-based pressure-sensitive adhesive is a known silicone-based pressure-sensitive adhesive described in JP 2014-047280 A. The number of kinds of the silicone-based pressure-sensitive adhesives may be only one, or two or more.

The silicone-based pressure-sensitive adhesive may be typically formed of a silicone-based pressure-sensitive adhesive composition. Any appropriate silicone-based pressure-sensitive adhesive composition may be adopted as the silicone-based pressure-sensitive adhesive composition to the extent that the effects of the present invention are not impaired. Examples of the silicone-based pressure-sensitive adhesive composition include a peroxide cross-linked silicone-based pressure-sensitive adhesive composition (peroxide-curable silicone-based pressure-sensitive adhesive composition) and an addition reaction type silicone-based pressure-sensitive adhesive composition. Of those, an addition reaction type silicone-based pressure-sensitive adhesive composition is preferred.

The silicone-based pressure-sensitive adhesive composition typically contains at least one kind selected from the group consisting of: a silicone rubber; and a silicone resin. The content of the at least one kind selected from the group consisting of: a silicone rubber; and a silicone resin in the silicone-based pressure-sensitive adhesive composition is preferably from 50 wt% to 100 wt%, more preferably from 70 wt% to 100 wt%, still more preferably from 90 wt% to 100 wt%.

Any appropriate silicone rubber may be adopted as the silicone rubber to the extent that the effects of the present invention are not impaired.

One embodiment of the silicone rubber is, for example, a polymer in which diorganosiloxanes (D unit: difunctional constituent unit "$R_2SiO$") are linearly connected, specifically, for example, an organopolysiloxane containing dimethylsiloxane or methylphenylsiloxane serving as a main constituent unit.

Another embodiment of the silicone rubber is, for example, a silicone-based rubber having an alkenyl group bonded to a silicon atom, a silicone-based rubber having at least a methyl group, or a silicone-based rubber having a silanol group or a hydrolyzable alkoxysilyl group at a terminal thereof in accordance with the type of a reaction.

The weight-average molecular weight of the organopolysiloxane in the silicone rubber is preferably from 100000 to 1000000, more preferably from 150000 to 1000000, still more preferably from 280000 to 1000000, particularly preferably from 500000 to 900000. The weight-average molecular weight may be measured by, for example, GPC.

Any appropriate silicone resin may be adopted as the silicone resin to the extent that the effects of the present invention are not impaired.

An example of the silicone resin is an organopolysiloxane having at least one kind of constituent unit selected from the group consisting of: an M unit ("$R_3SiO_{0.5}$" constituent unit); a Q unit ("$SiO_2$" constituent unit); a T unit ("$RSiO_{1.5}$" constituent unit); and a D unit ("$R_2SiO$" constituent unit). R in the constituent unit represents a hydrocarbon group or a hydroxyl group, and examples of the hydrocarbon group include: aliphatic hydrocarbon groups (e.g., alkyl groups, such as a methyl group and an ethyl group); alicyclic hydrocarbon groups (e.g., cycloalkyl groups such as a cyclohexyl group); and aromatic hydrocarbon groups (e.g., aryl groups, such as a phenyl group and a naphthyl group).

A ratio (molar ratio) of "an M unit" to "at least one kind selected from a Q unit, a T unit, and a D unit" in the silicone resin is, for example, preferably from 0.3/1 to 1.5/1, more preferably from 0.5/1 to 1.3/1 in terms of "an M unit"/"at least one kind selected from a Q unit, a T unit, and a D unit" (molar ratio).

Various functional groups such as a vinyl group may be introduced into the organopolysiloxane in the silicone resin as required. The functional group to be introduced may be a functional group that can cause a cross-linking reaction.

The weight-average molecular weight of the organopolysiloxane in the silicone resin is preferably 1000 or more, more preferably from 1000 to 20000, still more preferably from 1500 to 10000.

The silicone rubber and the silicone resin may be used in combination. In this case, the usage amount of the silicone resin is preferably from 1 part by weight to 300 parts by weight, more preferably from 10 parts by weight to 220 parts by weight, still more preferably from 20 parts by weight to 180 parts by weight with respect to 100 parts by weight of the silicone rubber.

When the silicone rubber and the silicone resin are used in combination, the state of the silicone rubber and the silicone resin may be a mixed state in which the silicone rubber and the silicone resin are simply mixed, or may be a condensed state in which the silicone rubber and the silicone resin react with each other to form a condensate (particularly a partial condensate) by mixing the silicone rubber and the silicone resin.

The silicone-based pressure-sensitive adhesive composition preferably contains a cross-linking agent because a silicone-based pressure-sensitive adhesive layer that is as a cross-linked structure can be formed. The number of kinds of the cross-linking agents may be only one, or two or more. Any appropriate cross-linking agent may be adopted as the cross-linking agent to the extent that the effects of the present invention are not impaired. Examples of such cross-linking agent include a siloxane-based cross-linking agent (silicone-based cross-linking agent) and a peroxide-based cross-linking agent.

An example of the siloxane-based cross-linking agent is a polyorganohydrogen siloxane having two or more hydrogen atoms bonded to a silicon atom in a molecule thereof. In such polyorganohydrogen siloxane, various organic groups may each be bonded to the silicon atom to which the hydrogen atoms are bonded in addition to the hydrogen atoms. Examples of such organic group include: alkyl groups, such as a methyl group and an ethyl group; aryl groups such as a phenyl group; and halogenated alkyl groups. Of those, an alkyl group is preferred, and a methyl group is more preferred from the viewpoints of synthesis and handling. In addition, the backbone structure of the polyorganohydrogen siloxane may be any of linear, branched, and cyclic backbone structures, and is preferably a linear backbone structure.

Examples of the peroxide-based cross-linking agent include benzoyl peroxide, t-butyl peroxybenzoate, and dicumyl peroxide.

The silicone-based pressure-sensitive adhesive composition may contain an additive, such as a catalyst, a filler, a plasticizer, an age resistor, an antistatic agent, or a colorant (e.g., a pigment or a dye) as required. The number of kinds of the additives may be only one, or two or more.

<2-2. Impregnation Step>

In the impregnation step, the pressure-sensitive adhesive is impregnated with the pressure-sensitive adhesive treatment liquid to perform impregnation treatment.

Any appropriate impregnation method may be adopted as a method for such impregnation in accordance with, for example, the kind of the pressure-sensitive adhesive to the extent that the effects of the present invention are not impaired. The phrase "the pressure-sensitive adhesive is impregnated with the pressure-sensitive adhesive treatment liquid" as used herein refers to the establishment of such a state that the pressure-sensitive adhesive in the pressure-sensitive adhesive tape is impregnated with the pressure-sensitive adhesive treatment liquid, and refers to, for example, the establishment of a state in which at least part of the pressure-sensitive adhesive is immersed in the pressure-sensitive adhesive treatment liquid. This is because, when the state in which at least part of the pressure-sensitive adhesive is immersed in the pressure-sensitive adhesive treatment liquid is established, the pressure-sensitive adhesive treatment liquid permeates the pressure-sensitive adhesive. Accordingly, the state may be a state in which the entirety of the pressure-sensitive adhesive tape is immersed in the pressure-sensitive adhesive treatment liquid, or a state in which at least part of the pressure-sensitive adhesive, being at least part of the pressure-sensitive adhesive tape, is immersed in the pressure-sensitive adhesive treatment liquid.

In the impregnation step, the pressure-sensitive adhesive treatment liquid is preferably subjected to at least one kind selected from the group consisting of: stirring; and ultrasonic irradiation. In the impregnation step, when the pressure-sensitive adhesive treatment liquid is subjected to at least one kind selected from the group consisting of: stirring; and ultrasonic irradiation, the phase-separated pressure-sensitive adhesive treatment liquid is brought into a state in which an organic solvent phase is dispersed in an aqueous phase, and the pressure-sensitive adhesive can selectively and efficiently absorb and be impregnated with the organic solvent phase in the pressure-sensitive adhesive treatment liquid. Thus, the efficiency with which the pressure-sensitive adhesive is separated can be improved.

Any appropriate stirring method may be adopted as a method for the stirring in accordance with, for example, the kind of the pressure-sensitive adhesive to the extent that the effects of the present invention are not impaired. Any appropriate stirring time may also be adopted as a time for the stirring in accordance with, for example, the kind of the pressure-sensitive adhesive to the extent that the effects of the present invention are not impaired.

Any appropriate ultrasonic irradiation method may be adopted as a method for the ultrasonic irradiation in accordance with, for example, the kind of the pressure-sensitive adhesive to the extent that the effects of the present invention are not impaired. Any appropriate ultrasonic irradiation time may also be adopted as a time for the ultrasonic irradiation in accordance with, for example, the kind of the pressure-sensitive adhesive to the extent that the effects of the present invention are not impaired.

Any appropriate temperature may be adopted as the temperature of a surrounding environment in a state in which the pressure-sensitive adhesive is impregnated with the pressure-sensitive adhesive treatment liquid to the extent that the effects of the present invention are not impaired. Such temperature is preferably 10°C or more, more preferably 15°C or more, still more preferably 20°C or more, still more preferably 25°C or more, still more preferably 30°C or more, particularly preferably 35°C or more because the effects of the present invention can be further expressed, and the upper limit value thereof is preferably 120°C or less, more preferably 100°C or less, still more preferably 80°C or less.

In the impregnation step, the pressure-sensitive adhesive treatment liquid is preferably warmed. In one preferred embodiment of the impregnation step, the pressure-sensitive adhesive treatment liquid is subjected to at least one kind selected from the group consisting of: stirring; and ultrasonic irradiation and is warmed because the effects of the present invention can be further expressed. The temperature of the warming is preferably 35°C or more, more preferably 40°C or more, still more preferably 45°C or more, still more preferably 50°C or more, still more preferably 55°C or more, particularly preferably 60°C or more, most preferably 65°C or more.

In the impregnation step, the usage amount of the pressure-sensitive adhesive treatment liquid is preferably from 100 parts by weight to 6000 parts by weight, more preferably from 200 parts by weight to 3000 parts by weight, still more preferably from 200 parts by weight to 1000 parts by weight, particularly preferably from 200 parts by weight to 800 parts by weight, most preferably from 200 parts by weight to 400 parts by weight with respect to 100 parts by weight of the pressure-sensitive adhesive tape because the effects of the present invention can be further expressed.

Through the impregnation step, a state in which the pressure-sensitive adhesive can be easily removed from the pressure-sensitive adhesive tape is obtained, and a state in which a recycled base material suppressed in contamination and corrosion can be easily recovered is obtained.

<2-3. Material Separation Step>

The method of producing a recycled base material according to the embodiment of the present invention preferably includes a material separation step of separating a structure derived from the base material from the pressure-sensitive adhesive tape after the impregnation step. The term "structure derived from the base material" as used herein means the base material in the pressure-sensitive adhesive tape after the impregnation treatment.

Any appropriate method may be adopted as the material separation step as long as the method can separate the structure derived from the base material from the pressure-sensitive adhesive tape after the impregnation step to the extent that the effects of the present invention are not impaired. Such method preferably includes adding a washing liquid to the pressure-sensitive adhesive tape after the impregnation treatment. Thus, the structure derived from the base material can be easily separated from the pressure-sensitive adhesive tape after the impregnation treatment. When the washing liquid is added to the pressure-sensitive adhesive tape after the impregnation treatment, the pressure-sensitive adhesive tape may be taken out from the pressure-sensitive adhesive treatment liquid after the impregnation treatment, and then the washing liquid may be added to the pressure-sensitive adhesive tape.

Any appropriate amount may be adopted as an amount of the washing liquid to be added to the pressure-sensitive adhesive tape after the impregnation treatment to the extent that the effects of the present invention are not impaired. Such amount is, for example, preferably from 200 parts by weight to 10000 parts by weight, more preferably from 500 parts by weight to 10000 parts by weight, still more preferably from 1000 parts by weight to 10000 parts by weight, particularly preferably from 1000 parts by weight to 5000 parts by weight, most preferably from 1000 parts by weight to 3000 parts by weight in terms of an amount of the washing liquid with respect to 100 parts by weight of the pressure-sensitive adhesive tape.

A mixture of the structure derived from the base material, the composition derived from the pressure-sensitive adhesive, and the liquid component (typically, washing water or the pressure-sensitive adhesive treatment liquid) is typically formed by adding the washing liquid to the pressure-sensitive adhesive tape after the impregnation treatment. The structure derived from the base material is separated from the mixture, and drying or washing is performed as required. Thus, the separated structure derived from the base material becomes a recycled base material.

<2-4. Liquid Separation Step>

The method of producing a recycled base material according to the embodiment of the present invention may include a liquid separation step of separating water and the organic solvent from each other in the liquid component (typically, the washing liquid or the pressure-sensitive adhesive treatment liquid) obtained in the material separation step. When the liquid separation step is included, water and the organic solvent can be recovered to be reused.

Any appropriate method may be adopted as a method of separating water and the organic solvent from each other to the extent that the effects of the present invention are not impaired. Examples of such method include: separation by a difference in specific gravity in a heterogeneous solvent; separation using an alcohol separation membrane or a RO membrane; separation using an alcohol adsorbent; and separation by distillation utilizing a difference in boiling point between water and the organic solvent.

An example of the washing liquid is water, an organic solvent, a saturated aqueous solution of an organic solvent, and a mixed liquid containing water and an organic solvent in an amount exceeding its saturation amount.

Any appropriate organic solvent may be adopted as the organic solvent that may be used for the washing liquid to the extent that the effects of the present invention are not impaired. Examples of such organic solvent include alcohols, hydrocarbons, ketones, esters, ethers, amines, nitriles, carboxylic acids, terpenes, nitro compounds, and halogen compounds. For those organic solvents, reference may be made to the description of the above-mentioned organic solvent in the pressure-sensitive adhesive treatment liquid.

<<3. Method of producing Recycled Polymer Composition>>

A method of producing a recycled polymer composition according to an embodiment of the present invention is a method of producing a recycled polymer composition from a pressure-sensitive adhesive tape including a base material and a pressure-sensitive adhesive, the method including an impregnation step of impregnating the pressure-sensitive adhesive tape with the pressure-sensitive adhesive treatment liquid according to the embodiment of the present invention to perform impregnation treatment.

<3-1. Pressure-sensitive Adhesive Tape>

For the pressure-sensitive adhesive tape, reference may be made to the description in the section <2-1. Pressure-sensitive Adhesive Tape>.

<3-2. Impregnation Step>

For the impregnation step, reference may be made to the description in the section <2-2. Impregnation Step>.

<3-3. Material Separation Step>

The method of producing a recycled polymer composition according to the embodiment of the present invention preferably includes a material separation step of separating a composition derived from the pressure-sensitive adhesive from the pressure-sensitive adhesive tape after the impregnation step. The term "composition derived from the pressure-sensitive adhesive" as used herein means the pressure-sensitive adhesive in the pressure-sensitive adhesive tape after the impregnation treatment.

Any appropriate method may be adopted as the material separation step as long as the method can separate the composition derived from the pressure-sensitive adhesive from the pressure-sensitive adhesive tape after the impregnation step to the extent that the effects of the present invention are not impaired. Such method preferably includes adding a washing liquid to the pressure-sensitive adhesive tape after the impregnation treatment. Thus, the composition derived from the pressure-sensitive adhesive can be easily separated from the pressure-sensitive adhesive tape after the impregnation treatment. When the washing liquid is added to the pressure-sensitive adhesive tape after the impregnation treatment, the pressure-sensitive adhesive tape may be taken out from the pressure-sensitive adhesive treatment liquid after the impregnation treatment, and then the washing liquid may be added to the pressure-sensitive adhesive tape.

Any appropriate amount may be adopted as an amount of the washing liquid to be added to the pressure-sensitive adhesive tape after the impregnation treatment to the extent that the effects of the present invention are not impaired. Such amount is, for example, preferably from 200 parts by weight to 10000 parts by weight, more preferably from 500 parts by weight to 10000 parts by weight, still more preferably from 1000 parts by weight to 10000 parts by weight, particularly preferably from 1000 parts by weight to 5000 parts by weight, most preferably from 1000 parts by weight to 3000 parts by weight in terms of an amount of the washing liquid with respect to 100 parts by weight of the pressure-sensitive adhesive tape.

A mixture of the structure derived from the base material, the composition derived from the pressure-sensitive adhesive, and the liquid component (typically, the washing liquid or the pressure-sensitive adhesive treatment liquid) is typically formed by adding the washing liquid to the pressure-sensitive adhesive tape after the impregnation treatment. The composition derived from the pressure-sensitive adhesive is separated from the mixture, and drying or washing is performed as required. Thus, the separated composition derived from the pressure-sensitive adhesive becomes a recycled polymer composition. The recycled polymer composition becomes, for example, a recycled acrylic polymer composition containing a recycled acrylic polymer when the separated pressure-sensitive adhesive is an acrylic pressure-sensitive adhesive, and a recycled silicone-based polymer composition containing a recycled silicone-based polymer when the separated pressure-sensitive adhesive is a silicone-based pressure-sensitive adhesive.

An example of the washing liquid is water, an organic solvent, a saturated aqueous solution of an organic solvent, and a mixed liquid containing water and an organic solvent in an amount exceeding its saturation amount.

Any appropriate organic solvent may be adopted as the organic solvent that may be used for the washing liquid to the extent that the effects of the present invention are not impaired. Examples of such organic solvent include alcohols, hydrocarbons, ketones, esters, ethers, amines, nitriles, carboxylic acids, terpenes, nitro compounds, and halogen compounds. For those organic solvents, reference may be made to the description of the above-mentioned organic solvent in the pressure-sensitive adhesive treatment liquid.

<3-4. Liquid Separation Step>

For the liquid separation step, reference may be made to the description in the section <2-4. Liquid Separation Step>.

EXAMPLES

The present invention is specifically described below by way of Examples. However, the present invention is by no means limited to these Examples. Test and evaluation methods in Examples and the like are as described below.

<Calculation of Relative Distance Ra between Hansen Solubility Parameter Value of Water in Pressure-sensitive Adhesive Treatment Liquid and Hansen Solubility Parameter Value of Organic Solvent in Pressure-sensitive Adhesive Treatment Liquid>

A relative distance Ra was calculated in accordance with the following equation.

$$Ra=\sqrt{[4(\delta D2-\delta D1)^2+(\delta P2-\delta P1)^2+(\delta H2-\delta H1)^2]}$$

$\delta D1$: Energy produced by an intermolecular dispersion force of an organic solvent (unit: $MPa^{0.5}$)
$\delta D2$: Energy produced by an intermolecular dispersion force of water (unit: $MPa^{0.5}$)
$\delta P1$: Energy produced by an intermolecular dipole interaction of the organic solvent (unit: $MPa^{0.5}$)
$\delta P2$: Energy produced by an intermolecular dipole interaction of water (unit: $MPa^{0.5}$)
$\delta H1$: Energy produced by an intermolecular hydrogen bond of the organic solvent (unit: $MPa^{0.5}$)
$\delta H2$: Energy produced by an intermolecular hydrogen bond of water (unit: $MPa^{0.5}$)

<Evaluation of Miscibility of Pressure-sensitive Adhesive Treatment Liquid>

An organic solvent, water, and an alkaline compound were loaded into a screw-capped vial (30 mL) at kinds and ratios for preparing a pressure-sensitive adhesive treatment liquid to be evaluated. After complete dissolution of the alkaline compound had been recognized, the liquid was stirred by shaking 10 or more times. Immediately after the stirring, a case in which the liquid became a suspension was evaluated as "phase-separated", and a case in which the liquid was transparent was evaluated as "miscible".

<Evaluation of Water Solubility of Recycled Polymer Composition>

A pressure-sensitive adhesive tape sample after impregnation treatment was loaded into washing water, followed by stirring for 3 minutes or more. After the stirring, a case in which a recycled polymer composition floated under a state in which the composition kept its original form without being dissolved in the washing water was evaluated as "not dissolved," and a case in which the recycled polymer composition was dissolved in the washing water was evaluated as "dissolved".

<Evaluation of Ease of Recovery of Recycled Polymer Composition utilizing Difference in Specific Gravity>

A pressure-sensitive adhesive tape sample after impregnation treatment was loaded into washing water, followed by stirring for 3 minutes or more. After the stirring, a case in which a recycled polymer composition was peeled from a base material to float under a state in which the composition kept its original form without being dissolved in the washing water was evaluated as "possible" to easily recover the composition, and a case in which the recycled polymer composition was dissolved in the washing water to be separated from the base material was evaluated as "impossible" to easily recover the composition. Herein, the base material of each of pressure-sensitive adhesive tape samples used in Examples and Comparative Examples is a PET base material having a specific gravity of 1 or more, and hence the base material settles in the washing water. In the above-mentioned evaluation of "impossible", the recycled polymer composition is dissolved in the washing water, and hence there may occur a problem of contamination of the washing water by the recycled polymer composition or a problem of contamination of the base material due to re-adhesion of the recycled polymer composition dissolved in the washing water to the base material.

<Appearance Evaluation of Recycled Base Material>

A recycled base material separated in a material separation step was recovered and air-dried, and its appearance was visually observed. A case in which cloudiness was able to be observed through transmission or reflection of light was represented as "whitened", and a case in which no cloudiness was observed was represented as "transparent". The whitening phenomenon serves as an indicator of the degrees of adhesion of a contaminant to the recycled base material and corrosion of a surface of the recycled base material.

[Example 1]

An acrylic pressure-sensitive adhesive tape (manufactured by Nitto Denko Corporation, product name: "No. 3195MS", after foaming) was cut into a size measuring 20 mm by 20 mm to provide a pressure-sensitive adhesive tape sample.
Potassium hydroxide was added to a mixed solution containing 1-butanol, methanol, and water at a volume ratio of 11.8%:12.0%:76.2% so that its concentration was 3 wt%. Thus, a pressure-sensitive adhesive treatment liquid (1) was prepared.
The pressure-sensitive adhesive tape sample and the pressure-sensitive adhesive treatment liquid (1) were loaded into a screw-capped vial (30 mL) so that their weight ratio was 1:2. In the screw-capped vial, the pressure-sensitive adhesive of the pressure-sensitive adhesive tape sample was impregnated with the pressure-sensitive adhesive treatment liquid (1).
The screw-capped vial was loaded into an ultrasonic stirrer (manufactured by As One Corporation, product name: "VS-F100", frequency=50 kHz), and the contents were stirred under ultrasonic irradiation at room temperature (25°C) for 60 minutes.
After that, the pressure-sensitive adhesive tape sample was taken out from the pressure-sensitive adhesive treatment liquid (1), the pressure-sensitive adhesive tape sample was immersed in washing water, and the contents were stirred with a hand for about 3 minutes. Then, a recycled acrylic polymer composition derived from the pressure-sensitive adhesive in the pressure-sensitive adhesive tape sample was peeled from a recycled base material derived from a base material in the pressure-sensitive adhesive tape sample, and was separated by a difference in specific gravity in the washing water. The recycled acrylic polymer composition floating in the washing water was recovered together with a supernatant by overflowing by excessive addition of water, and a solid content thereof was subjected to filter trapping. Thus, a recycled acrylic polymer composition (1) derived from the pressure-sensitive adhesive in the pressure-sensitive adhesive tape sample was obtained. In addition, the recycled base material derived from the base material in the pressure-sensitive adhesive tape sample settled in the washing water, and was pulled up after the recovery of the recycled acrylic polymer composition. Thus, a recycled base material (1) derived from the base material in the pressure-sensitive adhesive tape sample was obtained.

The results are shown in Table 1.

[Example 2]

Potassium hydroxide was added to a mixed solution containing 1-butanol, methanol, and water at a volume ratio of 23.0%:11.8%:65.2% so that its concentration was 3 wt%. Thus, a pressure-sensitive adhesive treatment liquid (2) was prepared.

A recycled base material (2) and a recycled acrylic polymer composition (2) were obtained in the same manner as in Example 1 except that the pressure-sensitive adhesive treatment liquid (2) was used instead of the pressure-sensitive adhesive treatment liquid (1).

The results are shown in Table 1.

[Example 3]

Potassium hydroxide was added to a mixed solution containing 1-butanol, methanol, and water at a volume ratio of 33.8%:11.5%:54.7% so that its concentration was 3 wt%. Thus, a pressure-sensitive adhesive treatment liquid (3) was prepared.

A recycled base material (3) and a recycled acrylic polymer composition (3) were obtained in the same manner as in Example 1 except that the pressure-sensitive adhesive treatment liquid (3) was used instead of the pressure-sensitive adhesive treatment liquid (1).

The results are shown in Table 1.

[Example 4]

Potassium hydroxide was added to a mixed solution containing 1-butanol, methanol, and water at a volume ratio of 44.1%:11.3%:44.6% so that its concentration was 3 wt%. Thus, a pressure-sensitive adhesive treatment liquid (4) was prepared.

A recycled base material (4) and a recycled acrylic polymer composition (4) were obtained in the same manner as in Example 1 except that the pressure-sensitive adhesive treatment liquid (4) was used instead of the pressure-sensitive adhesive treatment liquid (1).

The results are shown in Table 1.

[Example 5]

Potassium hydroxide was added to a mixed solution containing 1-butanol, methanol, and water at a volume ratio of 63.5%:10.8%:25.7% so that its concentration was 3 wt%. Thus, a pressure-sensitive adhesive treatment liquid (5) was prepared.

A recycled base material (5) and a recycled acrylic polymer composition (5) were obtained in the same manner as in Example 1 except that the pressure-sensitive adhesive treatment liquid (5) was used instead of the pressure-sensitive adhesive treatment liquid (1).

The results are shown in Table 1.

[Example 6]

Potassium hydroxide was added to a mixed solution containing 1-butanol, methanol, and water at a volume ratio of 23.0%:11.8%:65.2% so that its concentration was 1.5 wt%. Thus, a pressure-sensitive adhesive treatment liquid (6) was prepared.

A recycled base material (6) and a recycled acrylic polymer composition (6) were obtained in the same manner as in Example 1 except that: the pressure-sensitive adhesive treatment liquid (6) was used instead of the pressure-sensitive adhesive treatment liquid (1); and the stirring time with the ultrasonic stirrer was changed to 90 minutes.

The results are shown in Table 1.

[Example 7]

Potassium hydroxide was added to a mixed solution containing 1-butanol, methanol, and water at a volume ratio of 23.0%:11.8%:65.2% so that its concentration was 2.0 wt%. Thus, a pressure-sensitive adhesive treatment liquid (7) was prepared.

A recycled base material (7) and a recycled acrylic polymer composition (7) were obtained in the same manner as in Example 1 except that the pressure-sensitive adhesive treatment liquid (7) was used instead of the pressure-sensitive adhesive treatment liquid (1).

The results are shown in Table 1.

[Example 8]

Potassium hydroxide was added to a mixed solution containing 1-butanol, methanol, and water at a volume ratio of 33.8%:11.5%:54.7% so that its concentration was 1.5 wt%. Thus, a pressure-sensitive adhesive treatment liquid (8) was prepared.

A recycled base material (8) and a recycled acrylic polymer composition (8) were obtained in the same manner as in Example 1 except that: the pressure-sensitive adhesive treatment liquid (8) was used instead of the pressure-sensitive adhesive treatment liquid (1); and the stirring time with the ultrasonic stirrer was changed to 90 minutes.

The results are shown in Table 1.

[Example 9]

Potassium hydroxide was added to a mixed solution containing 1-butanol, methanol, and water at a volume ratio of 33.8%:11.5%:54.7% so that its concentration was 2.0 wt%. Thus, a pressure-sensitive adhesive treatment liquid (9) was prepared.

A recycled base material (9) and a recycled acrylic polymer composition (9) were obtained in the same manner as in Example 1 except that the pressure-sensitive adhesive treatment liquid (9) was used instead of the pressure-sensitive adhesive treatment liquid (1).

The results are shown in Table 1.

[Comparative Example 1]

Potassium hydroxide was added to a mixed solution containing 1-butanol, methanol, and water at a volume ratio of 62.1%:21.2%:16.8% so that its concentration was 3.0 wt%. Thus, a pressure-sensitive adhesive treatment liquid (C1) was prepared.

A recycled base material (C1) was obtained in the same manner as in Example 1 except that the pressure-sensitive adhesive treatment liquid (C1) was used instead of the pressure-sensitive adhesive treatment liquid (1).

The results are shown in Table 2.

[Comparative Example 2]

Potassium hydroxide was added to a mixed solution containing 1-butanol, methanol, and water at a volume ratio of 60.7%:31.1%:8.2% so that its concentration was 3.0 wt%. Thus, a pressure-sensitive adhesive treatment liquid (C2) was prepared.

A recycled base material (C2) was obtained in the same manner as in Example 1 except that the pressure-sensitive adhesive treatment liquid (C2) was used instead of the pressure-sensitive adhesive treatment liquid (1).

The results are shown in Table 2.

[Comparative Example 3]

Potassium hydroxide was added to a mixed solution containing 1-butanol, methanol, and water at a volume ratio of 32.2%:33.0%:34.8% so that its concentration was 3.0 wt%. Thus, a pressure-sensitive adhesive treatment liquid (C3) was prepared.

A recycled base material (C3) was obtained in the same manner as in Example 1 except that the pressure-sensitive adhesive treatment liquid (C3) was used instead of the pressure-sensitive adhesive treatment liquid (1).

The results are shown in Table 2.

[Comparative Example 4]

Potassium hydroxide was added to a mixed solution containing 1-butanol, methanol, and water at a volume ratio of 11.2%:34.4%:54.4% so that its concentration was 3.0 wt%. Thus, a pressure-sensitive adhesive treatment liquid (C4) was prepared.

A recycled base material (C4) was obtained in the same manner as in Example 1 except that the pressure-sensitive adhesive treatment liquid (C4) was used instead of the pressure-sensitive adhesive treatment liquid (1).

The results are shown in Table 2.

[Comparative Example 5]

Potassium hydroxide was added to a mixed solution containing 1-butanol, methanol, and water at a volume ratio of 10.0%:81.9%:8.1% so that its concentration was 3.0 wt%. Thus, a pressure-sensitive adhesive treatment liquid (C5) was prepared.

A recycled base material (C5) was obtained in the same manner as in Example 1 except that the pressure-sensitive adhesive treatment liquid (C5) was used instead of the pressure-sensitive adhesive treatment liquid (1).

The results are shown in Table 2.

[Example 10]

An acrylic pressure-sensitive adhesive tape (manufactured by Nitto Denko Corporation, product name: "No. 3195MS", after foaming) was cut into a size measuring 20 mm by 20 mm to provide a pressure-sensitive adhesive tape sample.

Potassium hydroxide was added to a mixed solution containing 1-butanol and water at a volume ratio of 12.1%:87.9% so that its concentration was 2.6 wt%. Thus, a pressure-sensitive adhesive treatment liquid (10) was prepared.

The pressure-sensitive adhesive tape sample and the pressure-sensitive adhesive treatment liquid (10) were loaded into a screw-capped vial (30 mL) so that their weight ratio was 1:5. In the screw-capped vial, the pressure-sensitive adhesive of the pressure-sensitive adhesive tape sample was impregnated with the pressure-sensitive adhesive treatment liquid (10).

The screw-capped vial was loaded into an ultrasonic stirrer (manufactured by As One Corporation, product name: "VS-F100", frequency=50 kHz), and the contents were stirred under ultrasonic irradiation at room temperature (25°C) for 60 minutes.

After that, the pressure-sensitive adhesive tape sample was taken out from the pressure-sensitive adhesive treatment liquid (10), the pressure-sensitive adhesive tape sample was immersed in washing water, and the contents were stirred with a hand for about 3 minutes. Then, a recycled acrylic polymer composition derived from the pressure-sensitive adhesive in the pressure-sensitive adhesive tape sample was peeled from a recycled base material derived from a base material in the pressure-sensitive adhesive tape sample, and was separated by a difference in specific gravity in the washing water. The recycled acrylic polymer composition floating in the washing water was recovered together with a supernatant by overflowing by excessive addition of water, and a solid content thereof was subjected to filter trapping. Thus, a recycled acrylic polymer composition (10) derived from the pressure-sensitive adhesive in the pressure-sensitive adhesive tape sample was obtained. In addition, the recycled base material derived from the base material in the pressure-sensitive adhesive tape sample settled in the washing water, and was pulled up after the recovery of the recycled acrylic polymer composition. Thus, a recycled base material (10) derived from the base material in the pressure-sensitive adhesive tape sample was obtained.

The results are shown in Table 3.

[Example 11]

An acrylic pressure-sensitive adhesive tape (manufactured by Nitto Denko Corporation, product name: "No. 3195MS", after foaming) was cut into a size measuring 20 mm by 20 mm to provide a pressure-sensitive adhesive tape sample.

The pressure-sensitive adhesive tape sample and the pressure-sensitive adhesive treatment liquid (10) were loaded into a screw-capped vial (30 mL) so that their weight ratio was 1:5. In the screw-capped vial, the pressure-sensitive adhesive of the pressure-sensitive adhesive tape sample was impregnated with the pressure-sensitive adhesive treatment liquid (10).

Water warmed to 70°C in advance and the screw-capped vial were loaded into an ultrasonic stirrer (manufactured by As One Corporation, product name: "VS-F100", frequency=50 kHz), and the contents were stirred for 30 minutes under ultrasonic irradiation.

The subsequent steps were performed in the same manner as in Example 10. Thus, a recycled base material (11) and a recycled acrylic polymer composition (11) were obtained.

The results are shown in Table 3.

[Example 12]

An acrylic pressure-sensitive adhesive tape (manufactured by Nitto Denko Corporation, product name: "No. 3195MS", after foaming) was cut into a size measuring 20 mm by 20 mm to provide a pressure-sensitive adhesive tape sample.

Potassium hydroxide was added to a mixed solution containing 1-butanol and water at a volume ratio of 12.1%:87.9% so that its concentration was 2.6 wt%. Thus, a pressure-sensitive adhesive treatment liquid (12) was prepared.

The pressure-sensitive adhesive tape sample and the pressure-sensitive adhesive treatment liquid (12) were loaded into a screw-capped vial (30 mL) so that their weight ratio was 1:5. After that, the liquid was stirred by shaking 10 or more times. In the screw-capped vial, the pressure-sensitive adhesive of the pressure-sensitive adhesive tape sample was impregnated with the pressure-sensitive adhesive treatment liquid (12), and the pressure-sensitive adhesive treatment liquid (12) was cloudy.

The screw-capped vial was loaded into a water bath set to 70°C and was taken out every 5 minutes, the contents were stirred by shaking 10 or more times, and the vial was loaded again into the water bath. Those operations were performed until a recycled acrylic polymer (12) derived from the pressure-sensitive adhesive was peeled from a recycled base material (12) derived from a base material in the pressure-sensitive adhesive tape sample in the pressure-sensitive adhesive treatment liquid (12). The treatment time was 30 minutes in total.

The subsequent steps were performed in the same manner as in Example 10. Thus, the recycled base material (12) and a recycled acrylic polymer composition (12) were obtained.

The results are shown in Table 3.

[Example 13]

Potassium hydroxide was added to a mixed solution containing 1-pentanol and water at a volume ratio of 11.9%:88.1% so that its concentration was 2.6 wt%. Thus, a pressure-sensitive adhesive treatment liquid (13) was prepared.

A recycled base material (13) and a recycled acrylic polymer composition (13) were obtained in the same manner as in Example 12 except that the pressure-sensitive adhesive treatment liquid (13) was used instead of the pressure-sensitive adhesive treatment liquid (12).

The treatment time was 40 minutes in total.

The results are shown in Table 3.

[Example 14]

Potassium hydroxide was added to a mixed solution containing 1-heptanol and water at a volume ratio of 11.9%:88.1% so that its concentration was 2.6 wt%. Thus, a pressure-sensitive adhesive treatment liquid (14) was prepared.

A recycled base material (14) and a recycled acrylic polymer composition (14) were obtained in the same manner as in Example 12 except that the pressure-sensitive adhesive treatment liquid (14) was used instead of the pressure-sensitive adhesive treatment liquid (12).

The treatment time was 140 minutes in total.

The results are shown in Table 3.

[Example 15]

Potassium hydroxide was added to a mixed solution containing 2-ethylhexanol and water at a volume ratio of 11.8%:88.2% so that its concentration was 2.6 wt%. Thus, a pressure-sensitive adhesive treatment liquid (15) was prepared.

A recycled base material (15) and a recycled acrylic polymer composition (15) were obtained in the same manner as in Example 12 except that the pressure-sensitive adhesive treatment liquid (15) was used instead of the pressure-sensitive adhesive treatment liquid (12).

The treatment time was 180 minutes in total.

The results are shown in Table 3.

[Example 16]

Potassium hydroxide was added to a mixed solution containing benzyl alcohol and water at a volume ratio of 9.7%:90.3% so that its concentration was 2.6 wt%. Thus, a pressure-sensitive adhesive treatment liquid (16) was prepared.

A recycled base material (16) and a recycled acrylic polymer composition (16) were obtained in the same manner as in Example 12 except that the pressure-sensitive adhesive treatment liquid (16) was used instead of the pressure-sensitive adhesive treatment liquid (12).

The treatment time was 30 minutes in total.

The results are shown in Table 3.

[Example 17]

Sodium hydroxide was added to a mixed solution containing 1-butanol and water at a volume ratio of 12.1%:87.9% so that its concentration was 2.6 wt%. Thus, a pressure-sensitive adhesive treatment liquid (17) was prepared.

A recycled base material (17) and a recycled acrylic polymer composition (17) were obtained in the same manner as in Example 12 except that the pressure-sensitive adhesive treatment liquid (17) was used instead of the pressure-sensitive adhesive treatment liquid (12).

The treatment time was 25 minutes in total.

The results are shown in Table 3.

[Example 18]

An acrylic pressure-sensitive adhesive tape (manufactured by Nitto Denko Corporation, product name: "RP207") was cut into a size measuring 20 mm by 20 mm to provide a pressure-sensitive adhesive tape sample.

Potassium hydroxide was added to a mixed solution containing 1-butanol and water at a volume ratio of 12.1%:87.9% so that its concentration was 3 wt%. Thus, a pressure-sensitive adhesive treatment liquid (18) was prepared.

The pressure-sensitive adhesive tape sample and the pressure-sensitive adhesive treatment liquid (18) were loaded into a screw-capped vial (30 mL) so that their weight ratio was 1:5. After that, the liquid was stirred by shaking 10 or more times. In the screw-capped vial, the pressure-sensitive adhesive of the pressure-sensitive adhesive tape sample was impregnated with the pressure-sensitive adhesive treatment liquid (18), and the pressure-sensitive adhesive treatment liquid (18) was cloudy.

The screw-capped vial was loaded into a water bath set to 70°C and was taken out every 5 minutes, the contents were stirred by shaking 10 or more times, and the vial was loaded again into the water bath. Those operations were performed until a recycled acrylic polymer (18) derived from the pressure-sensitive adhesive was peeled from a recycled base material (18) derived from a base material in the pressure-sensitive adhesive tape sample in the pressure-sensitive adhesive treatment liquid (18).

The subsequent steps were performed in the same manner as in Example 10. Thus, the recycled base material (18) and a recycled acrylic polymer composition (18) were obtained.

The treatment time was 30 minutes in total.

The results are shown in Table 3.

[Example 19]

Potassium hydroxide was added to a mixed solution containing benzyl alcohol and water at a volume ratio of 9.7%:90.3% so that its concentration was 3 wt%. Thus, a pressure-sensitive adhesive treatment liquid (19) was prepared.

A recycled base material (19) and a recycled acrylic polymer composition (19) were obtained in the same manner as in Example 18 except that the pressure-sensitive adhesive treatment liquid (19) was used instead of the pressure-sensitive adhesive treatment liquid (18).

The treatment time was 35 minutes in total.

The results are shown in Table 3.

[Example 20]

A silicone-based pressure-sensitive adhesive tape (manufactured by Nitto Denko Corporation, product name: "No. 923S") was cut into a size measuring 10 mm by 10 mm to provide a pressure-sensitive adhesive tape sample.

Potassium hydroxide was added to a mixed solution containing 1-butanol and water at a volume ratio of 12.1%:87.9% so that its concentration was 3 wt%. Thus, a pressure-sensitive adhesive treatment liquid (20) was prepared.

The pressure-sensitive adhesive tape sample and the pressure-sensitive adhesive treatment liquid (20) were loaded into a screw-capped vial (30 mL) so that their weight ratio was 1:10. After that, the liquid was stirred by shaking 10 or more times. In the screw-capped vial, the pressure-sensitive adhesive of the pressure-sensitive adhesive tape sample was impregnated with the pressure-sensitive adhesive treatment liquid (20), and the pressure-sensitive adhesive treatment liquid (20) was cloudy.

The screw-capped vial was loaded into a water bath set to 70°C and was taken out every 5 minutes, the contents were stirred by shaking 10 or more times, and the vial was loaded again into the water bath. Those operations were performed until a recycled silicone-based polymer (20) derived from the pressure-sensitive adhesive was peeled from a recycled base material (20) derived from a base material in the pressure-sensitive adhesive tape sample in the pressure-sensitive adhesive treatment liquid (20). The treatment time was 230 minutes in total.

The subsequent steps were performed in the same manner as in Example 10. Thus, the recycled base material (20) and a recycled silicone-based polymer composition (20) were obtained.

The results are shown in Table 4.

[Example 21]

An acrylic pressure-sensitive adhesive tape (manufactured by Nitto Denko Corporation, product name: "RP108C") was cut into a size measuring 10 mm by 10 mm to provide a pressure-sensitive adhesive tape sample.

Potassium hydroxide was added to a mixed solution containing 1-butanol and water at a volume ratio of 12.1%:87.9% so that its concentration was 3 wt%. Thus, a pressure-sensitive adhesive treatment liquid (21) was prepared.

The pressure-sensitive adhesive tape sample and the pressure-sensitive adhesive treatment liquid (21) were loaded into a screw-capped vial (30 mL) so that their weight ratio was 1:10. After that, the contents were stirred by shaking 10 or more times. In the screw-capped vial, the pressure-sensitive adhesive of the pressure-sensitive adhesive tape sample was impregnated with the pressure-sensitive adhesive treatment liquid (21), and the pressure-sensitive adhesive treatment liquid (21) was cloudy.

The screw-capped vial was loaded into a water bath set to 70°C and was taken out every 5 minutes, the contents were stirred by shaking 10 or more times, and the vial was loaded again into the water bath. Those operations were performed until a recycled acrylic polymer (21) derived from the pressure-sensitive adhesive was peeled from a recycled base material (21) derived from a base material in the pressure-sensitive adhesive tape sample in the pressure-sensitive adhesive treatment liquid (21). The treatment time was 30 minutes in total.

The subsequent steps were performed in the same manner as in Example 10. Thus, the recycled base material (21) and a recycled acrylic polymer composition (21) were obtained.

The results are shown in Table 4.

[Example 22]

An acrylic pressure-sensitive adhesive tape (manufactured by Nitto Denko Corporation, product name: "SPV-A-6050") was cut into a size measuring 10 mm by 10 mm to provide a pressure-sensitive adhesive tape sample.

Potassium hydroxide was added to a mixed solution containing 1-butanol and water at a volume ratio of 12.1%:87.9% so that its concentration was 3 wt%. Thus, a pressure-sensitive adhesive treatment liquid (22) was prepared.

The pressure-sensitive adhesive tape sample and the pressure-sensitive adhesive treatment liquid (22) were loaded into a screw-capped vial (30 mL) so that their weight ratio was 1:10. After that, the contents were stirred by shaking 10 or more times. In the screw-capped vial, the pressure-sensitive adhesive of the pressure-sensitive adhesive tape sample was impregnated with the pressure-sensitive adhesive treatment liquid (22), and the pressure-sensitive adhesive treatment liquid (22) was cloudy.

The screw-capped vial was loaded into a water bath set to 70°C and was taken out every 5 minutes, the contents were stirred by shaking 10 or more times, and the vial was loaded again into the water bath. Those operations were performed until a recycled acrylic polymer (22) derived from the pressure-sensitive adhesive was peeled from a recycled base material (22) derived from a base material in the pressure-sensitive adhesive tape sample in the pressure-sensitive adhesive treatment liquid (22). The treatment time was 320 minutes in total.

The subsequent steps were performed in the same manner as in Example 10. Thus, the recycled base material (22) and a recycled acrylic polymer composition (22) were obtained.

The results are shown in Table 4.

[Example 23]

1 g of a pressure-sensitive adhesive of an acrylic pressure-sensitive adhesive tape (manufactured by Nitto Denko Corporation, product name: "No. 5000NS") was bonded to a SUS304 BA plate by a finger pressure to provide a pressure-sensitive adhesive tape sample.

Potassium hydroxide was added to a mixed solution containing 1-butanol and water at a volume ratio of 12.1%:87.9% so that its concentration was 3 wt%. Thus, a pressure-sensitive adhesive treatment liquid (23) was prepared.

The pressure-sensitive adhesive tape sample and the pressure-sensitive adhesive treatment liquid (23) were loaded into a screw-capped vial (30 mL) so that their weight ratio was 1:20. After that, the contents were stirred by shaking 10 or more times. In the screw-capped vial, the pressure-sensitive adhesive of the pressure-sensitive adhesive tape sample was impregnated with the pressure-sensitive adhesive treatment liquid (23), and the pressure-sensitive adhesive treatment liquid (23) was cloudy.

The screw-capped vial was loaded into a water bath set to 70°C and was taken out every 5 minutes, the contents were stirred by shaking 10 or more times, and the vial was loaded again into the water bath. Those operations were performed until a recycled acrylic polymer (23) derived from the pressure-sensitive adhesive was peeled from the SUS304 BA plate of the pressure-sensitive adhesive tape sample in the pressure-sensitive adhesive treatment liquid (23). The treatment time was 95 minutes in total.

The subsequent steps were performed in the same manner as in Example 10. Thus, a recycled acrylic polymer composition (23) was obtained.

The results are shown in Table 4.

[Example 24]

An acrylic pressure-sensitive adhesive tape (manufactured by Nitto Denko Corporation, product name: "No. 3195MS", after foaming) was cut into a size of about φ18 mm with a pulverizer to provide a pressure-sensitive adhesive tape sample.

Potassium hydroxide was added to a mixed solution containing 1-butanol and water at a volume ratio of 12.1%:87.9% so that its concentration was 3 wt%. Thus, a pressure-sensitive adhesive treatment liquid (24) was prepared.

The pressure-sensitive adhesive tape sample and the pressure-sensitive adhesive treatment liquid (24) were loaded into a polymerization flask (1 L) so that their weight ratio was 1:20. In the polymerization flask, the pressure-sensitive adhesive of the pressure-sensitive adhesive tape sample was impregnated with the pressure-sensitive adhesive treatment liquid (24). The polymerization flask was loaded into a water bath set to 70°C in advance and was warmed, and the contents were stirred with a propeller blade at 735 rpm. Those operations were performed until a recycled acrylic polymer (24) derived from the pressure-sensitive adhesive was peeled from a recycled base material (24) derived from a base material in the pressure-sensitive adhesive tape sample in the pressure-sensitive adhesive treatment liquid (24). The treatment time was 25 minutes in total.

The subsequent steps were performed in the same manner as in Example 10. Thus, the recycled base material (24) and a recycled acrylic polymer composition (24) were obtained.

The results are shown in Table 4.

[Example 25]

Potassium hydroxide was added to a mixed solution containing 1-butanol and water at a volume ratio of 12.1%:87.9% so that its concentration was 1 wt%. Thus, a pressure-sensitive adhesive treatment liquid (25) was prepared.

A recycled base material (25) and a recycled acrylic polymer composition (25) were obtained in the same manner as in Example 24 except that the pressure-sensitive adhesive treatment liquid (25) was used instead of the pressure-sensitive adhesive treatment liquid (24).

The treatment time was 40 minutes in total.

The results are shown in Table 4.

[Example 26]

Potassium hydroxide was added to a mixed solution containing 1-butanol and water at a volume ratio of 12.1%:87.9% so that its concentration was 0.5 wt%. Thus, a pressure-sensitive adhesive treatment liquid (26) was prepared.

A recycled base material (26) and a recycled acrylic polymer composition (26) were obtained in the same manner as in Example 24 except that the pressure-sensitive adhesive treatment liquid (26) was used instead of the pressure-sensitive adhesive treatment liquid (24).

The treatment time was 70 minutes in total.

The results are shown in Table 4.

[Example 27]

An acrylic pressure-sensitive adhesive tape (manufactured by Nitto Denko Corporation, product name: "No. 3195MS", after foaming) was cut into a size of about φ18 mm with a pulverizer to provide a pressure-sensitive adhesive tape sample.

Potassium hydroxide was added to a mixed solution containing 1-butanol and water at a volume ratio of 12.1%:87.9% so that its concentration was 3 wt%. Thus, a pressure-sensitive adhesive treatment liquid (27) was prepared.

The pressure-sensitive adhesive tape sample and the pressure-sensitive adhesive treatment liquid (27) warmed to 70°C in advance were loaded into a pail (20 L) so that their weight ratio was 1:5. In the pail, the pressure-sensitive adhesive of the pressure-sensitive adhesive tape sample was impregnated with the pressure-sensitive adhesive treatment liquid (27).

The contents were stirred by rotating the pail at 1 rpm for 30 minutes with a drum shaker apparatus (manufactured by Misugi Co., Ltd., Mazemazeman).

The subsequent steps were performed in the same manner as in Example 10. Thus, a recycled base material (27) and a recycled acrylic polymer composition (27) were obtained.

The results are shown in Table 4.

[Example 28]

An acrylic pressure-sensitive adhesive tape (manufactured by Nitto Denko Corporation, product name: "No. 3195MS", after foaming) was cut into a size of about φ18 mm with a pulverizer to provide a pressure-sensitive adhesive tape sample.

Potassium hydroxide was added to a mixed solution containing 1-butanol and water at a volume ratio of 12.1%:87.9% so that its concentration was 3 wt%. Thus, a pressure-sensitive adhesive treatment liquid (28) was prepared.

The pressure-sensitive adhesive tape sample and the pressure-sensitive adhesive treatment liquid (28) were loaded into a polymerization kettle (20 L) so that their weight ratio was 1:5. In the polymerization kettle, the pressure-sensitive adhesive of the pressure-sensitive adhesive tape sample was impregnated with the pressure-sensitive adhesive treatment liquid (28). The temperature of a heat medium in the polymerization kettle was set to 70°C, and stirring was performed with a blade in the polymerization kettle at 50 rpm for 30 minutes.

The subsequent steps were performed in the same manner as in Example 10. Thus, a recycled base material (28) and a recycled acrylic polymer composition (28) were obtained.

The results are shown in Table 4.

[Example 29]

An acrylic pressure-sensitive adhesive tape (manufactured by Nitto Denko Corporation, product name: "No. 3195MS", after foaming) was cut into a size of about φ18 mm with a pulverizer to provide a pressure-sensitive adhesive tape sample.

Potassium hydroxide was added to a mixed solution containing 1-butanol and water at a volume ratio of 12.1%:87.9% so that its concentration was 3 wt%. Thus, a pressure-sensitive adhesive treatment liquid (29) was prepared.

The pressure-sensitive adhesive tape sample and the pressure-sensitive adhesive treatment liquid (29) were loaded into a container made of glass (10 L) so that their weight ratio was 1:5. In the container made of glass, the pressure-sensitive adhesive of the pressure-sensitive adhesive tape sample was impregnated with the pressure-sensitive adhesive treatment liquid (29).

The container made of glass was loaded into a tank-type ultrasonic transducer (manufactured by Kaijo Corporation, model number: 70110/75 kHz+modulation), and the container made of glass was immersed in water warmed to 60°C. Further, a horn-type ultrasonic transducer (manufactured by Kaijo Corporation, model number: 6281A/19.5 kHz) was installed from an upper portion of the container made of glass, and ultrasonic irradiation was performed for 150 minutes.

The subsequent steps were performed in the same manner as in Example 10. Thus, a recycled base material (29) and a recycled acrylic polymer composition (29) were obtained.

The results are shown in Table 4.

[Comparative Example 6]

Potassium hydroxide was added to a mixed solution containing 1-butanol, methanol, and water at a volume ratio of 62.1%:21.2%:16.8% so that its concentration was 2.6 wt%. Thus, a pressure-sensitive adhesive treatment liquid (C6) was prepared.

A recycled base material (C6) was obtained in the same manner as in Example 12 except that the pressure-sensitive adhesive treatment liquid (C6) was used instead of the pressure-sensitive adhesive treatment liquid (12).

The results are shown in Table 5.

[Comparative Example 7]

Sodium hydroxide was added to a mixed solution containing 1-butanol, methanol, and water at a volume ratio of 62.1%:21.2%:16.8% so that its concentration was 2.6 wt%. Thus, a pressure-sensitive adhesive treatment liquid (C7) was prepared.

A recycled base material (C7) was obtained in the same manner as in Example 12 except that the pressure-sensitive adhesive treatment liquid (C7) was used instead of the pressure-sensitive adhesive treatment liquid (12).

The results are shown in Table 5.

[Comparative Example 8]

Potassium hydroxide was added to a mixed solution containing isopropanol and water at a volume ratio of 12.5%:87.5% so that its concentration was 2.6 wt%. Thus, a pressure-sensitive adhesive treatment liquid (C8) was prepared.

A recycled base material (C8) was obtained in the same manner as in Example 12 except that the pressure-sensitive adhesive treatment liquid (C8) was used instead of the pressure-sensitive adhesive treatment liquid (12).

The results are shown in Table 5.

[Comparative Example 9]

Potassium hydroxide was added to a mixed solution containing 1-butanol, methanol, and water at a volume ratio of 22.5%:23.0%:54.6% so that its concentration was 2.6 wt%. Thus, a pressure-sensitive adhesive treatment liquid (C9) was prepared.

A recycled base material (C9) was obtained in the same manner as in Example 12 except that the pressure-sensitive adhesive treatment liquid (C9) was used instead of the pressure-sensitive adhesive treatment liquid (12).

The results are shown in Table 5.

[Comparative Example 10]

Potassium hydroxide was added to a mixed solution containing 1-butanol, methanol, and water at a volume ratio of 62.1%:21.2%:16.8% so that its concentration was 3 wt%. Thus, a pressure-sensitive adhesive treatment liquid (C10) was prepared.

A recycled base material (C10) was obtained in the same manner as in Example 18 except that the pressure-sensitive adhesive treatment liquid (C10) was used instead of the pressure-sensitive adhesive treatment liquid (18).

The results are shown in Table 5.

[Comparative Example 11]

Potassium hydroxide was added to a mixed solution containing 1-butanol, methanol, and water at a volume ratio of 62.1%:21.2%:16.8% so that its concentration was 3 wt%. Thus, a pressure-sensitive adhesive treatment liquid (C11) was prepared.

The subsequent steps were performed in the same manner as in Example 23 except that the pressure-sensitive adhesive treatment liquid (C11) was used instead of the pressure-sensitive adhesive treatment liquid (23).

The results are shown in Table 5.

[Comparative Example 12]

Potassium hydroxide was added to a mixed solution containing isopropanol and water at a volume ratio of 56.1%:43.9% so that its concentration was 3 wt%. Thus, a pressure-sensitive adhesive treatment liquid (C12) was prepared.
The subsequent steps were performed in the same manner as in Example 23 except that the pressure-sensitive adhesive treatment liquid (C12) was used instead of the pressure-sensitive adhesive treatment liquid (23).
The results are shown in Table 5.

[Comparative Example 13]

Potassium hydroxide was added to a mixed solution containing 1-butanol, methanol, and water at a volume ratio of 62.1%:21.2%:16.8% so that its concentration was 3 wt%. Thus, a pressure-sensitive adhesive treatment liquid (C13) was prepared.
The subsequent steps were performed in the same manner as in Example 24 except that the pressure-sensitive adhesive treatment liquid (C13) was used instead of the pressure-sensitive adhesive treatment liquid (24).
The results are shown in Table 5.

[Comparative Example 14]

Potassium hydroxide was added to a mixed solution containing isopropanol and water at a volume ratio of 56.1%:43.9% so that its concentration was 3 wt%. Thus, a pressure-sensitive adhesive treatment liquid (C14) was prepared.
The subsequent steps were performed in the same manner as in Example 24 except that the pressure-sensitive adhesive treatment liquid (C14) was used instead of the pressure-sensitive adhesive treatment liquid (24).
The results are shown in Table 5.

Table 1-1

| | | | Example 1 | Example 2 | Example 3 | Example 4 | Example 5 |
|---|---|---|---|---|---|---|---|
| Pressure-sensitive adhesive treatment liquid | Organic solvent (vol%) | Methanol | 12.0 | 11.8 | 11.5 | 11.3 | 10.8 |
| | | Isopropanol | - | - | - | - | - |
| | | 1-Butanol | 11.8 | 23.0 | 33.8 | 44.1 | 63.5 |
| | | 1-Pentanol | - | - | - | - | - |
| | | 1-Heptanol | - | - | - | - | - |
| | | 2-Ethylhexanol | - | - | - | - | - |
| | | Benzyl alcohol | - | - | - | - | - |
| | Water (vol%) | | 76.2 | 65.2 | 54.7 | 44.6 | 25.7 |
| | Relative distance Ra between water and organic solvent | | 24.2 | 25.6 | 26.3 | 26.7 | 27.2 |
| | Alkali concentration (wt%) | Potassium hydroxide | 3.0 | 3.0 | 3.0 | 3.0 | 3.0 |
| | | Sodium hydroxide | - | - | - | - | - |
| | Miscibility of pressure-sensitive adhesive treatment liquid | | Phase-separated | Phase-separated | Phase-separated | Phase-separated | Phase-separated |
| Conditions | Pressure-sensitive adhesive tape sample: pressure-sensitive adhesive treatment liquid (weight ratio) | | 1:2 | 1:2 | 1:2 | 1:2 | 1:2 |
| | Kind of pressure-sensitive adhesive tape | | No. 3195MS | No. 3195MS | No. 3195MS | No. 3195MS | No. 3195MS |
| | Kind of pressure-sensitive adhesive | | Acrylic | Acrylic | Acrylic | Acrylic | Acrylic |
| | Kind of base material | | PET | PET | PET | PET | PET |
| | Stirring system | | Ultrasonic | Ultrasonic | Ultrasonic | Ultrasonic | Ultrasonic |
| | Treatment temperature (°C) | | Room temperature | Room temperature | Room temperature | Room temperature | Room temperature |
| | Treatment time (min) | | 60 | 60 | 60 | 60 | 60 |

EP 4 603 556 A1

(continued)

| Results | | Example 1 | Example 2 | Example 3 | Example 4 | Example 5 |
|---|---|---|---|---|---|---|
| | Water solubility of recycled acrylic polymer composition | Not dissolved | Not dissolved | Not dissolved | Not dissolved | Not dissolved |
| | Recovery of recycled acrylic polymer composition | Possible | Possible | Possible | Possible | Possible |
| | Appearance evaluation of recycled base material | ○ | ○ | ○ | ○ | ○ |

Table 1-2

| | | | Example 6 | Example 7 | Example 8 | Example 9 |
|---|---|---|---|---|---|---|
| Pressure-sensitive adhesive treatment liquid | Organic solvent (vol%) | Methanol | 11.8 | 11.8 | 11.5 | 11.5 |
| | | Isopropanol | - | - | - | - |
| | | 1-Butanol | 23.0 | 23.0 | 33.8 | 33.8 |
| | | 1-Pentanol | - | - | - | - |
| | | 1-Heptanol | - | - | - | - |
| | | 2-Ethylhexanol | - | - | - | - |
| | | Benzyl alcohol | - | - | - | - |
| | Water (vol%) | | 65.2 | 65.2 | 54.7 | 54.7 |
| | Relative distance Ra between water and organic solvent | | 25.6 | 25.6 | 26.3 | 26.3 |
| | Alkali concentration (wt%) | Potassium hydroxide | 2.0 | 2.0 | 1.5 | 20 |
| | | Sodium hydroxide | - | - | - | - |
| | Miscibility of pressure-sensitive adhesive treatment liquid | | Phase-separated | Phase-separated | Phase-separated | Phase-separated |
| Conditions | Pressure-sensitive adhesive tape sample: pressure-sensitive adhesive treatment liquid (weight ratio) | | 1:2 | 1:2 | 1:2 | 1:2 |
| | Kind of pressure-sensitive adhesive tape | | No. 3195MS | No. 3195MS | No. 3195MS | No. 3195MS |
| | Kind of pressure-sensitive adhesive | | Acrylic | Acrylic | Acrylic | Acrylic |
| | Kind of base material | | PET | PET | PET | PET |
| | Stirring system | | Ultrasonic | Ultrasonic | Ultrasonic | Ultrasonic |
| | Treatment temperature (°C) | | Room temperature | Room temperature | Room temperature | Room temperature |
| | Treatment time (min) | | 90 | 60 | 90 | 60 |
| Results | Water solubility of recycled acrylic polymer composition | | Not dissolved | Not dissolved | Not dissolved | Not dissolved |
| | Recovery of recycled acrylic polymer composition | | Possible | Possible | Possible | Possible |
| | Appearance evaluation of recycled base material | | ○ | ○ | ○ | ○ |

Table 2

| | | Comparative Example 1 | Comparative Example 2 | Comparative Example 3 | Comparative Example 4 | Comparative Example 5 |
|---|---|---|---|---|---|---|
| Pressure-sensitive adhesive treatment liquid | Organic solvent (vol%) — Methanol | 21.2 | 31.1 | 33.0 | 34.4 | 81.9 |
| | Isopropanol | - | - | - | - | - |
| | 1-Butanol | 62.1 | 60.7 | 32.2 | 11.2 | 10.0 |
| | 1-Pentanol | - | - | - | - | - |
| | 1-Heptanol | - | - | - | - | - |
| | 2-Ethylhexanol | - | - | - | - | - |
| | Benzyl alcohol | | | | | |
| | Water (vol%) | 16.8 | 8.2 | 34.8 | 54.4 | 8.1 |
| | Relative distance Ra between water and organic solvent | 26.3 | 25.6 | 24.2 | 22.3 | 21.2 |
| | Alkali concentration (wt%) — Potassium hydroxide | 3.0 | 3.0 | 3.0 | 3.0 | 3.0 |
| | Sodium hydroxide | - | - | - | - | - |
| | Miscibility of pressure-sensitive adhesive treatment liquid | Miscible | Miscible | Miscible | Miscible | Miscible |
| | Pressure-sensitive adhesive tape sample: pressure-sensitive adhesive treatment liquid (weight ratio) | 1:2 | 1:2 | 1:2 | 1:2 | 1:2 |
| | Kind of pressure-sensitive adhesive tape | No. 3195MS | No. 3195MS | No. 3195MS | No. 3195MS | No. 3195MS |
| | Kind of pressure-sensitive adhesive | Acrylic | Acrylic | Acrylic | Acrylic | Acrylic |
| | Kind of base material | PET | PET | PET | PET | PET |
| Conditions | Stirring system | Ultrasonic | Ultrasonic | Ultrasonic | Ultrasonic | Ultrasonic |
| | Treatment temperature (°C) | Room temperature | Room temperature | Room temperature | Room temperature | Room temperature |
| | Treatment time (min) | 60 | 60 | 60 | 60 | 60 |

29

(continued)

| | | Comparative Example 1 | Comparative Example 2 | Comparative Example 3 | Comparative Example 4 | Comparative Example 5 |
|---|---|---|---|---|---|---|
| Results | Water solubility of recycled acrylic polymer composition | Dissolved | Dissolved | Dissolved | Dissolved | Dissolved |
| | Recovery of recycled acrylic polymer composition | Impossible | Impossible | Impossible | Impossible | Impossible |
| | Appearance evaluation of recycled base material | × | × | × | × | × |

Table 3-1

| | | | Example 10 | Example 11 | Example 12 | Example 13 | Example 14 |
|---|---|---|---|---|---|---|---|
| Pressure-sensitive adhesive treatment liquid | Organic solvent (vol%) | Methanol | - | - | - | - | - |
| | | Isopropanol | - | - | - | - | - |
| | | 1-Butanol | 12.1 | 12.1 | 12.1 | - | - |
| | | 1-Pentanol | - | - | - | 11.9 | - |
| | | 1-Heptanol | - | - | - | - | 11.9 |
| | | 2-Ethylhexanol | - | - | - | - | - |
| | | Benzyl alcohol | - | - | - | - | - |
| | Water (vol%) | | 87.9 | 87.9 | 87.9 | 88.1 | 88.1 |
| | Relative distance Ra between water and organic solvent | | 33.6 | 33.6 | 33.6 | 30.2 | 32.4 |
| | Alkali concentration (wt%) | Potassium hydroxide | 2.6 | 2.6 | 2.6 | 2.6 | 2.6 |
| | | Sodium hydroxide | - | - | - | - | - |
| | Miscibility of pressure-sensitive adhesive treatment liquid | | Phase-separated | Phase-separated | Phase-separated | Phase-separated | Phase-separated |
| Conditions | Pressure-sensitive adhesive tape sample: pressure-sensitive adhesive treatment liquid (weight ratio) | | 1:5 | 1:5 | 1:5 | 1:5 | 1:5 |
| | Kind of pressure-sensitive adhesive tape | | No. 3195MS | No. 3195MS | No. 3195MS | No. 3195MS | No. 3195MS |
| | Kind of pressure-sensitive adhesive | | Acrylic | Acrylic | Acrylic | Acrylic | Acrylic |
| | Kind of base material | | PET | PET | PET | PET | PET |
| | Stirring system | | Ultrasonic | Ultrasonic | Shaking | Shaking | Shaking |
| | Treatment temperature (°C) | | Room temperature | 70 | 70 | 70 | 70 |
| | Treatment time (min) | | 60 | 30 | 30 | 40 | 140 |

| | | Example 10 | Example 11 | Example 12 | Example 13 | Example 14 |
|---|---|---|---|---|---|---|
| Results | Water solubility of recycled acrylic polymer composition | Not dissolved | Not dissolved | Not dissolved | Not dissolved | Not dissolved |
| | Recovery of recycled acrylic polymer composition | Possible | Possible | Possible | Possible | Possible |
| | Appearance evaluation of recycled base material | ○ | ○ | ○ | ○ | ○ |

Table 3-2

| | | | | Example 15 | Example 16 | Example 17 | Example 18 | Example 19 |
|---|---|---|---|---|---|---|---|---|
| Pressure-sensitive adhesive treatment liquid | Organic solvent (vol%) | | Methanol | - | - | - | - | - |
| | | | Isopropanol | - | - | - | - | - |
| | | | 1-Butanol | - | - | 12.1 | 12.1 | - |
| | | | 1-Pentanol | - | - | - | - | - |
| | | | 1-Heptanol | - | - | - | - | - |
| | | | 2-Ethylhexanol | 11.8 | - | - | - | - |
| | | | Benzyl alcohol | - | 9.7 | - | - | 9.7 |
| | Water (vol%) | | | 88.2 | 90.3 | 87.9 | 87.9 | 90.3 |
| | Relative distance Ra between water and organic solvent | | | 33.1 | 30.8 | 33.6 | 33.6 | 30.8 |
| | Alkali concentration (wt%) | | Potassium hydroxide | 2.6 | 2.6 | - | 3.0 | 3.0 |
| | | | Sodium hydroxide | - | - | 2.6 | - | - |
| | Miscibility of pressure-sensitive adhesive treatment liquid | | | Phase-separated | Phase-separated | Phase-separated | Phase-separated | Phase-separated |
| Conditions | Pressure-sensitive adhesive tape sample: pressure-sensitive adhesive treatment liquid (weight ratio) | | | 1:5 | 1:5 | 1:5 | 1:5 | 1:5 |
| | Kind of pressure-sensitive adhesive tape | | | No. 3195MS | No. 3195MS | No. 3195MS | RP207 | RP207 |
| | Kind of pressure-sensitive adhesive | | | Acrylic | Acrylic | Acrylic | Acrylic | Acrylic |
| | Kind of base material | | | PET | PET | PET | PET | PET |
| | Stirring system | | | Shaking | Shaking | Shaking | Shaking | Shaking |
| | Treatment temperature (°C) | | | 70 | 70 | 70 | 70 | 70 |
| | Treatment time (min) | | | 180 | 30 | 25 | 30 | 35 |
| Results | Water solubility of recycled acrylic polymer composition | | | Not dissolved | Not dissolved | Not dissolved | Not dissolved | Not dissolved |
| | Recovery of recycled acrylic polymer composition | | | Possible | Possible | Possible | Possible | Possible |
| | Appearance evaluation of recycled base material | | | ○ | ○ | ○ | ○ | ○ |

Table 4-1

| | | | | Example 20 | Example 21 | Example 22 | Example 23 | Example 24 |
|---|---|---|---|---|---|---|---|---|
| Pressure-sensitive adhesive treatment liquid | Organic solvent (vol%) | | Methanol | - | - | - | - | - |
| | | | Isopropanol | - | - | - | - | - |
| | | | 1-Butanol | 12.1 | 12.1 | 12.1 | 12.1 | 12.1 |
| | | | 1-Pentanol | - | - | - | - | - |
| | | | 1-Heptanol | - | - | - | - | - |
| | | | 2-Ethylhexanol | - | - | - | - | - |
| | | | Benzyl alcohol | - | - | - | - | - |
| | Water (vol%) | | | 87.9 | 87.9 | 87.9 | 87.9 | 87.9 |
| | Relative distance Ra between water and organic solvent | | | 33.6 | 33.6 | 33.6 | 33.6 | 33.6 |
| | Alkali concentration (wt%) | | Potassium hydroxide | 3.0 | 3.0 | 3.0 | 3.0 | 3.0 |
| | | | Sodium hydroxide | - | - | - | - | - |
| | Miscibility of pressure-sensitive adhesive treatment liquid | | | Phase-separated | Phase-separated | Phase-separated | Phase-separated | Phase-separated |
| Conditions | Pressure-sensitive adhesive tape sample: pressure-sensitive adhesive treatment liquid (weight ratio) | | | 1:10 | 1:10 | 1:10 | 1:20 | 1:20 |
| | Kind of pressure-sensitive adhesive tape | | | No. 923S | RP108C | SPV-A-6050 | No. 5000NS | No. 3195MS |
| | Kind of pressure-sensitive adhesive | | | Silicone-based | Acrylic | Acrylic | Acrylic | Acrylic |
| | Kind of base material | | | Fluorine-based | PET | PE | SUS304BA | PET |
| | Stirring system | | | Shaking | Shaking | Shaking | Shaking | Blade |
| | Treatment temperature (°C) | | | 70 | 70 | 70 | 70 | 70 |
| | Treatment time (min) | | | 230 | 30 | 320 | 95 | 25 |
| Results | Water solubility of recycled acrylic polymer composition | | | Not dissolved | Not dissolved | Not dissolved | Not dissolved | Not dissolved |
| | Recovery of recycled acrylic polymer composition | | | Possible | Possible | Possible | Possible | Possible |
| | Appearance evaluation of recycled base material | | | ○ | ○ | ○ | - | ○ |

Table 4-2

| | | Example 25 | Example 26 | Example 27 | Example 28 | Example 29 |
|---|---|---|---|---|---|---|
| Pressure-sensitive adhesive treatment liquid | Organic solvent (vol%) — Methanol | - | - | - | - | - |
| | Isopropanol | - | - | - | - | - |
| | 1-Butanol | 12.1 | 12.1 | 12.1 | 12.1 | 12.1 |
| | 1-Pentanol | - | - | - | - | - |
| | 1-Heptanol | - | - | - | - | - |
| | 2-Ethylhexanol | - | - | - | - | - |
| | Benzyl alcohol | - | - | - | - | - |
| | Water (vol%) | 87.9 | 87.9 | 87.9 | 87.9 | 87.9 |
| | Relative distance Ra between water and organic solvent | 33.6 | 33.6 | 33.6 | 33.6 | 33.6 |
| | Alkali concentration (wt%) — Potassium hydroxide | 1.0 | 0.5 | 3.0 | 3.0 | 3.0 |
| | Sodium hydroxide | - | - | - | - | - |
| | Miscibility of pressure-sensitive adhesive treatment liquid | Phase-separated | Phase-separated | Phase-separated | Phase-separated | Phase-separated |
| Conditions | Pressure-sensitive adhesive tape sample: pressure-sensitive adhesive treatment liquid (weight ratio) | 1:20 | 1:20 | 1:5 | 1:5 | 1:5 |
| | Kind of pressure-sensitive adhesive tape | No. 3195MS | No. 3195MS | No. 3195MS | No. 3195MS | No. 3195MS |
| | Kind of pressure-sensitive adhesive | Acrylic | Acrylic | Acrylic | Acrylic | Acrylic |
| | Kind of base material | PET | PET | PET | PET | PET |
| | Stirring system | Blade | Blade | Drum shaker | Blade | Ultrasonic |
| | Treatment temperature (°C) | 70 | 70 | 70 | 70 | 60 |
| | Treatment time (min) | 40 | 70 | 30 | 30 | 150 |
| Results | Water solubility of recycled acrylic polymer composition | Not dissolved | Not dissolved | Not dissolved | Not dissolved | Not dissolved |
| | Recovery of recycled acrylic polymer composition | Possible | Possible | Possible | Possible | Possible |
| | Appearance evaluation of recycled base material | ○ | ○ | ○ | ○ | ○ |

Table 5-1

| | | | Comparative Example 6 | Comparative Example 7 | Comparative Example 8 | Comparative Example 9 | Comparative Example 10 |
|---|---|---|---|---|---|---|---|
| Pressure-sensitive adhesive treatment liquid | Organic solvent (vol%) | Methanol | 21.2 | 21.2 | - | 23.0 | 21.2 |
| | | Isopropanol | - | - | 12.5 | - | - |
| | | 1-Butanol | 62.1 | 62.1 | - | 22.5 | 62.1 |
| | | 1-Pentanol | - | - | - | - | - |
| | | 1-Heptanol | - | - | - | - | - |
| | | 2-Ethylhexan ol | - | - | - | - | - |
| | | Benzyl alcohol | | | | | |
| | Water (vol%) | | 16.8 | 16.8 | 87.5 | 54.6 | 16.8 |
| | Relative distance Ra between water and organic solvent | | 26.3 | 26.3 | 27.7 | 24.2 | 26.3 |
| | Alkali concentratio n (wt%) | Potassium hydroxide | 2.6 | - | 2.6 | 2.6 | 3.0 |
| | | Sodium hydroxide | - | 2.6 | - | - | - |
| | Miscibility of pressure-sensitive adhesive treatment liquid | | Miscible | Miscible | Miscible | Miscible | Miscible |
| Conditions | Pressure-sensitive adhesive tape sample: pressure-sensitive adhesive treatment liquid (weight ratio) | | 1:5 | 1:5 | 1:5 | 1:5 | 1:5 |
| | Kind of pressure-sensitive adhesive tape | | No. 3195MS | No. 3195MS | No. 3195MS | No. 3195MS | RP207 |
| | Kind of pressure-sensitive adhesive | | Acrylic | Acrylic | Acrylic | Acrylic | Acrylic |
| | Kind of base material | | PET | PET | PET | PET | PET |
| | Stirring system | | Shaking | Shaking | Shaking | Shaking | Shaking |
| | Treatment temperature (°C) | | 70 | 70 | 70 | 70 | 70 |
| | Treatment time (min) | | 10 | 10 | 220 | 40 | 10 |
| Results | Water solubility of recycled acrylic polymer composition | | Dissolved | Dissolved | Dissolved | Dissolved | Dissolved |
| | Recovery of recycled acrylic polymer composition | | Impossible | Impossible | Impossible | Impossible | Impossible |
| | Appearance evaluation of recycled base material | | × | × | × | × | × |

EP 4 603 556 A1

36

Table 5-2

| | | | Comparative Example 11 | Comparative Example 12 | Comparative Example 13 | Comparative Example 14 |
|---|---|---|---|---|---|---|
| Pressure-sensitive adhesive treatment liquid | Organic solvent (vol%) | Methanol | 21.2 | - | 21.2 | - |
| | | Isopropanol | - | 56.1 | - | 56.1 |
| | | 1-Butanol | 62.1 | - | 62.1 | - |
| | | 1-Pentanol | - | - | - | - |
| | | 1-Heptanol | - | - | - | - |
| | | 2-Ethvlhexanol | - | - | - | - |
| | | Benzyl alcohol | - | - | - | - |
| | Water (vol%) | | 16.8 | 43.9 | 16.8 | 43.9 |
| | Relative distance Ra between water and organic solvent | | 26.3 | 27.7 | 26.3 | 27.7 |
| | Alkali concentration (wt%) | Potassium hydroxide | 3.0 | 3.0 | 3.0 | 3.0 |
| | | Sodium hydroxide | - | - | - | - |
| | Miscibility of pressure-sensitive adhesive treatment liquid | | Miscible | Miscible | Miscible | Miscible |
| Conditions | Pressure-sensitive adhesive tape sample: pressure-sensitive adhesive treatment liquid (weight ratio) | | 1:20 | 1:20 | 1:20 | 1:20 |
| | Kind of pressure-sensitive adhesive tape | | No. 5000NS | No. 5000NS | No. 3195MS | No. 3195MS |
| | Kind of pressure-sensitive adhesive | | Acrylic | Acrylic | Acrylic | Acrylic |
| | Kind of base material | | SUS304BA | SUS304BA | PET | PET |
| | Stirring system | | Shaking | Shaking | Blade | Blade |
| | Treatment temperature (°C) | | 70 | 70 | 70 | 70 |
| | Treatment time (min) | | 150 | 150 | 10 | 150 |
| Results | Water solubility of recycled acrylic polymer composition | | Dissolved | Dissolved | Dissolved | Dissolved |
| | Recovery of recycled acrylic polymer composition | | Impossible | Impossible | Impossible | Impossible |
| | Appearance evaluation of recycled base material | | × | × | × | × |

In each of Examples, the recovery of the recycled polymer composition was "possible". This is presumed to be because the pressure-sensitive adhesive treatment liquid in which the miscibility was evaluated to be "phase-separated" was used, and hence water was hardly impregnated into the pressure-sensitive adhesive in the pressure-sensitive adhesive tape sample, with the result that a transesterification reaction was mainly advanced. Accordingly, the recycled polymer composition was "not dissolved" in water and its recovery was "possible". In addition, the pressure-sensitive adhesive treatment liquids used in Examples each have a small environmental load because the amounts the alkaline compound and the organic solvent are smaller than those of the pressure-sensitive adhesive treatment liquids used in Comparative Examples. Further, in each of Examples, the appearance of the recycled base material was evaluated as "o". This is presumed to be because, as described above, the recycled polymer composition derived from the pressure-sensitive adhesive in the pressure-sensitive adhesive tape sample was "not dissolved" in water and its recovery was "possible", that is, the recycled polymer composition was able to be peeled from the base material to float in the washing water, and hence the re-adhesion of the recycled polymer composition to the base material was suppressed.

Meanwhile, in each of Comparative Examples, the recovery of the recycled polymer composition was "impossible". This is presumed to be because the pressure-sensitive adhesive treatment liquid in which the miscibility was evaluated to be "miscible" was used, and hence water was impregnated into the pressure-sensitive adhesive in the pressure-sensitive adhesive tape sample, with the result that a transesterification reaction and a saponification reaction were advanced. Accordingly, the recycled polymer composition was "dissolved" in water and its recovery was impossible. In addition, the pressure-sensitive adhesive treatment liquids used in Comparative Examples each have a large environmental load because the amounts of the alkaline compound and the organic solvent are larger than those of the pressure-sensitive adhesive treatment liquids used in Examples. Further, in each of Comparative Examples, the appearance of the recycled base material was evaluated as "×". This is presumed to be because, as described above, the recycled polymer composition derived from the pressure-sensitive adhesive in the pressure-sensitive adhesive tape sample is "dissolved" in water and its recovery is "impossible", that is, the recycled polymer composition is dissolved in the washing water to be separated from the base material, and hence the recycled polymer composition dissolved in the washing water re-adheres to the base material. In addition, when the recycled polymer composition is dissolved in the washing water, there may occur a problem of contamination of the washing water by the recycled polymer composition.

Industrial Applicability

The pressure-sensitive adhesive treatment liquid according to the embodiment of the present invention can be effectively utilized in the regeneration of, for example, a large amount of pressure-sensitive adhesive tape waste produced in, for example, a production site for an electronic member or an optical member.

**Claims**

1.   A pressure-sensitive adhesive treatment liquid for treating a pressure-sensitive adhesive, comprising:

water;
an organic solvent; and
an alkaline compound,
wherein the organic solvent and the water form a phase-separated state.

2.   The pressure-sensitive adhesive treatment liquid according to claim 1, wherein its concentration was the alkaline compound in the pressure-sensitive adhesive treatment liquid is from 0.001 wt% to 50 wt%.

3.   The pressure-sensitive adhesive treatment liquid according to claim 1, wherein a relative distance Ra between a Hansen solubility parameter value of the water and a Hansen solubility parameter value of the organic solvent is 24 or more,
where the relative distance Ra is calculated by the following equation.

$$Ra=\sqrt{[4(\delta D2-\delta D1)^2+(\delta P2-\delta P1)^2+(\delta H2-\delta H1)^2]}$$

$\delta$D1: Energy produced by an intermolecular dispersion force of the organic solvent (unit: $MPa^{0.5}$)
$\delta$D2: Energy produced by an intermolecular dispersion force of the water (unit: $MPa^{0.5}$)
$\delta$P1: Energy produced by an intermolecular dipole interaction of the organic solvent (unit: $MPa^{0.5}$)
$\delta$P2: Energy produced by an intermolecular dipole interaction of the water (unit: $MPa^{0.5}$)
$\delta$H1: Energy produced by an intermolecular hydrogen bond of the organic solvent (unit: $MPa^{0.5}$)
$\delta$H2: Energy produced by an intermolecular hydrogen bond of the water (unit: $MPa^{0.5}$)

4.   The pressure-sensitive adhesive treatment liquid according to claim 1, wherein the organic solvent is a single solvent.

5.   The pressure-sensitive adhesive treatment liquid according to claim 1, wherein the organic solvent is a mixed solvent.

6. The pressure-sensitive adhesive treatment liquid according to claim 1, wherein a content of the organic solvent is from 1 vol% to 85 vol% with respect to a total of 100 vol% of the water and the organic solvent in the pressure-sensitive adhesive treatment liquid.

7. The pressure-sensitive adhesive treatment liquid according to claim 1, wherein the pressure-sensitive adhesive is a pressure-sensitive adhesive in a pressure-sensitive adhesive tape.

8. A method of producing a recycled base material from a pressure-sensitive adhesive tape including a base material and a pressure-sensitive adhesive, the method comprising an impregnation step of impregnating the pressure-sensitive adhesive with the pressure-sensitive adhesive treatment liquid of any one of claims 1 to 7 to perform impregnation treatment.

9. The method of producing a recycled base material according to claim 8, wherein the impregnation step includes subjecting the pressure-sensitive adhesive treatment liquid to at least one kind selected from the group consisting of: stirring; and ultrasonic irradiation.

10. The method of producing a recycled base material according to claim 8, further comprising, after the impregnation step, a material separation step of separating a structure derived from the base material from the pressure-sensitive adhesive tape.

11. The method of producing a recycled base material according to claim 10, wherein the material separation step includes adding washing water to the pressure-sensitive adhesive tape after the impregnation treatment.

12. The method of producing a recycled base material according to claim 11, further comprising a liquid separation step of separating the water and the organic solvent from each other.

13. A method of producing a recycled polymer composition from a pressure-sensitive adhesive tape including a base material and a pressure-sensitive adhesive, the method comprising an impregnation step of impregnating the pressure-sensitive adhesive with the pressure-sensitive adhesive treatment liquid of any one of claims 1 to 7 to perform impregnation treatment.

14. The method of producing a recycled polymer composition according to claim 13, wherein the impregnation step includes subjecting the pressure-sensitive adhesive treatment liquid to at least one kind selected from the group consisting of: stirring; and ultrasonic irradiation.

15. The method of producing a recycled polymer composition according to claim 14, wherein the impregnation step includes warming the pressure-sensitive adhesive treatment liquid.

16. The method of producing a recycled polymer composition according to claim 13, further comprising, after the impregnation step, a material separation step of separating a composition derived from the pressure-sensitive adhesive from the pressure-sensitive adhesive tape.

17. The method of producing a recycled polymer composition according to claim 16, wherein the material separation step includes adding a washing liquid to the pressure-sensitive adhesive tape after the impregnation treatment.

18. The method of producing a recycled polymer composition according to claim 17, further comprising a liquid separation step of separating the water and the organic solvent from each other.

## INTERNATIONAL SEARCH REPORT

| | International application No. |
|---|---|
| | **PCT/JP2023/034775** |

**A. CLASSIFICATION OF SUBJECT MATTER**

*C09J 5/00*(2006.01)i; *B29B 17/02*(2006.01)i; *C09J 133/00*(2006.01)i; *C11D 7/04*(2006.01)i; *C11D 7/50*(2006.01)i
FI: C11D7/50; C09J5/00; C09J133/00; B29B17/02; C11D7/04

According to International Patent Classification (IPC) or to both national classification and IPC

**B. FIELDS SEARCHED**

Minimum documentation searched (classification system followed by classification symbols)

C09J5/00; B29B17/02; C09J133/00; C11D7/04; C11D7/50

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2003-292994 A (NIPPON SYNTHETIC CHEM IND CO LTD) 15 October 2003 (2003-10-15) claims, paragraphs [0006], [0011], [0015], [0071], examples 1-8 | 1-6 |
| Y | | 1-4, 6-18 |
| X | JP 10-195492 A (KAO CORP) 28 July 1998 (1998-07-28) claims, examples 1-27, tables 1-11 | 1-3, 5-6 |
| Y | | 1-4, 6-18 |
| X | KR 10-2011-0018226 A (KOREA INSTITUTE OF FOOTWEAR & LEATHER TECHNOLOGY) 23 February 2011 (2011-02-23) claims, examples 1-4, tables 1-2 | 1-3, 5-6 |
| Y | | 1-4, 6-18 |
| Y | JP 2021-161331 A (YOKOHAMA RUBBER CO LTD) 11 October 2021 (2021-10-11) claims, paragraphs [0008], [0021]-[0027], examples 1-16, tables 1-2 | 1-4, 6-18 |
| Y | WO 2022/004609 A1 (NITTO DENKO CORP) 06 January 2022 (2022-01-06) claims, paragraphs [0002]-[0018], [0249], examples, etc. | 1-4, 6-18 |

☑ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 December 2023** | **19 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| | International application No. |
|---|---|
| | **PCT/JP2023/034775** |

### C. DOCUMENTS CONSIDERED TO BE RELEVANT

| Category* | Citation of document, with indication, where appropriate, of the relevant passages | Relevant to claim No. |
|---|---|---|
| Y | JP 6-41592 A (SEKISUI CHEMICAL CO LTD) 15 February 1994 (1994-02-15)<br>claims, paragraphs [0002]-[0004], [0052], examples, etc. | 1-4, 6-18 |
| A | JP 2004-323841 A (KANSAI PAINT CO LTD) 18 November 2004 (2004-11-18)<br>claims, examples, etc. | 1-18 |

Form PCT/ISA/210 (second sheet) (January 2015)

**INTERNATIONAL SEARCH REPORT**
Information on patent family members

International application No.

**PCT/JP2023/034775**

| Patent document cited in search report | | | Publication date (day/month/year) | Patent family member(s) | | | Publication date (day/month/year) |
|---|---|---|---|---|---|---|---|
| JP | 2003-292994 | A | 15 October 2003 | (Family: none) | | | |
| JP | 10-195492 | A | 28 July 1998 | US | 5954891 | A | |
| | | | | claims, examples 1-27, tables 1-11 | | | |
| | | | | EP | 853116 | A1 | |
| | | | | DE | 69807124 | T2 | |
| | | | | AU | 4923497 | A | |
| | | | | CN | 1197113 | A | |
| KR | 10-2011-0018226 | A | 23 February 2011 | (Family: none) | | | |
| JP | 2021-161331 | A | 11 October 2021 | (Family: none) | | | |
| WO | 2022/004609 | A1 | 06 January 2022 | US | 2023/0242732 | A1 | |
| | | | | claims, paragraphs [0002]-[0020], [0257], examples, etc. | | | |
| | | | | EP | 4174123 | A1 | |
| | | | | CN | 115996976 | A | |
| | | | | TW | 202206585 | A | |
| JP | 6-41592 | A | 15 February 1994 | (Family: none) | | | |
| JP | 2004-323841 | A | 18 November 2004 | US | 2004/0202785 | A1 | |
| | | | | claims, examples, etc. | | | |
| | | | | EP | 1466950 | A1 | |

Form PCT/ISA/210 (patent family annex) (January 2015)

**REFERENCES CITED IN THE DESCRIPTION**

**Patent documents cited in the description**

- JP 2021175796 A
- JP 2002069411 A
- JP 2014047280 A